# EUROPEAN PATENT APPLICATION

(11) **EP 4 842 026 A1**
(43) Date of publication of application: **18.11.2026**
(21) Application number: 25747711.7
(22) Date of filing: 22.01.2025
(51) Int. Cl.: H04W 12/02

(54) **PRIVACY PROTECTION METHOD AND APPARATUS**

(30) Priority: 31.01.2024 CN 202410144758
(71) Applicant: Huawei Technologies Co., Ltd., Shenzhen, Guangdong 518129 (CN)
(72) Inventor: CHEN, Lei, Shenzhen, Guangdong 518129 (CN); SUN, Li, Shenzhen, Guangdong 518129 (CN); WANG, Wenhui, Shenzhen, Guangdong 518129 (CN); XI, Yan, Shenzhen, Guangdong 518129 (CN); WEI, Lai, Shenzhen, Guangdong 518129 (CN)
(74) Representative: Pfenning, Meinig & Partner mbB
(86) International application number: PCT/CN2025/074057
(87) International publication number: WO 2025/162141

(57) **Abstract**

This application provides a privacy protection method and an apparatus, and relates to the communication field. The method includes: obtaining a privacy requirement of a user that requests to execute a first sensing task, and sending, based on the privacy requirement of the user, first information used to determine a first algorithm. **In** this way, an apparatus that receives the first information, for example, a radio access network (radio access network, RAN) node or a terminal, may obtain the first algorithm, filter out, by using the first algorithm, data corresponding to the privacy requirement of the user (for example, data that the user wants to protect or data that the user does not want to disclose) from the first sensing data, to obtain second sensing data, and send the second sensing data. The first sensing data is data obtained by executing the first sensing task. **In** the foregoing method, the second sensing data does not include the data corresponding to the privacy requirement of the user. Therefore, a risk of leakage of user privacy data can be reduced.

## Description

This application claims priority to Chinese Patent Application No. 202410144758.6, filed with the China National Intellectual Property Administration on January 31, 2024 and entitled "PRIVACY PROTECTION METHOD AND APPARATUS", which is incorporated herein by reference in its entirety.

### TECHNICAL FIELD

This application relates to the communication field, and in particular, to a privacy protection method and an apparatus.

### BACKGROUND

With the development of communication technologies, an increasing quantity of communication scenarios have emerged, for example, people-to-people scenarios, internet of things scenarios, or vehicle-to-everything scenarios. To enhance service capabilities in these scenarios, a concept of integrated sensing and communication (integrated sensing and communication, ISAC) is proposed. ISAC, also be referred to as joint communications and sensing (joint communications and sensing, JCAS), means that a radio access network (radio access network, RAN) node and/or a terminal (collectively referred to as a sensing apparatus below) have/has a sensing capability in addition to a communication capability. For example, the sensing apparatus may detect a target through a sensing signal, obtain sensing data, and send the sensing data to a sensing data processing device (for example, a core network element), so that the sensing data processing device can determine a sensing result based on the sensing data. In the foregoing method, if the target includes a user, the sensing data detected by the sensing apparatus includes data related to the user. This increases a risk of leakage of user privacy data.

### SUMMARY

This application provides a privacy protection method and an apparatus, to reduce a risk of leakage of user privacy data.

To achieve the foregoing objective, the following technical solutions are used in this application.

According to a first aspect, a privacy protection method is provided. The method may be performed by a network node. The network node herein may be the network node, or may be a processor, a module, a logical node, a chip, a chip system, or the like that is in the network node and that implements the method. For example, the network node is a core network element. For example, the network node is a sensing service control network element, a sensing data processing network element, a newly added core network element, or a network element that has both a sensing service control function and a sensing data processing function.

The method includes: obtaining a privacy requirement of a first user, and sending first information based on the privacy requirement of the first user. The first user is a user that requests to execute a first sensing task. The first information is used to determine a first algorithm, and the first algorithm is used to filter out first data corresponding to the privacy requirement of the first user from first sensing data. The first sensing data is data obtained by executing the first sensing task. For example, the first sensing data is data sensed, measured, or detected by executing the first sensing task.

Based on the method provided in the first aspect, an apparatus that receives the first information, for example, a sensing apparatus, may determine the first algorithm, and filter out, by using the first algorithm, the first data corresponding to the privacy requirement of the first user (for example, data that the first user wants to protect or data that the first user does not want to disclose) from the first sensing data, so that sensing data after filtering does not include the first data, thereby reducing a risk of leakage of user privacy data.

In a possible implementation, the first information includes privacy protection metric information of the first user, and the privacy protection metric information of the first user is determined based on the privacy requirement of the first user.

Based on the foregoing possible implementation, the network node may indicate the privacy protection metric information of the first user to the sensing apparatus, so that the sensing apparatus determines the first algorithm based on the privacy protection metric information of the first user.

In a possible implementation, the first information includes information about the first algorithm, and the information about the first algorithm is determined based on the privacy requirement of the first user.

Based on the foregoing possible implementation, the network node may directly indicate the first algorithm to the sensing apparatus, so that the sensing apparatus processes the first sensing data by using the first algorithm.

In a possible implementation, the first information is further used to determine at least one of the following: a parameter of the first algorithm or an apparatus for executing the first algorithm.

Based on the foregoing possible implementation, if the first information is used to determine the parameter of the first algorithm, the sensing apparatus may determine the parameter of the first algorithm based on the first information, and process the first sensing data based on the parameter of the first algorithm by using the first algorithm. If the first information is used to determine the apparatus for executing the first algorithm, the sensing apparatus may determine, based on the first information, whether to execute the first algorithm.

In a possible implementation, the obtaining the privacy requirement of the first user includes: receiving a first request, where the first request is used to request to execute the first sensing task, and the first request includes information about the first sensing task and privacy requirement information of the first user; or receiving privacy requirement information of the first user from a core network element.

Based on the foregoing possible implementation, the network node may obtain the privacy requirement of the first user based on the request used to request to execute the first sensing task, or obtain the privacy requirement of the first user from the core network element (for example, a unified data management (unified data management, UDM) network element, a network repository function (network repository function, NRF) network element, or a unified data repository (unified data repository, UDR) network element).

In a possible implementation, the method further includes: receiving second sensing data. The second sensing data is obtained by processing the first sensing data by using the first algorithm, and the second sensing data is used to determine a sensing result of the first sensing task.

Based on the foregoing possible implementation, the network node may obtain the second sensing data, so that the network node obtains the sensing result of the first sensing task based on the second sensing data, or the network node sends the second sensing data to a service node (for example, an application server or an application function (application function, AF) network element).

In a possible implementation, the method further includes: determining a metric of the first sensing task; and determining a second algorithm based on the metric of the first sensing task. The second algorithm is used to determine the sensing result of the first sensing task based on the second sensing data.

Based on the foregoing possible implementation, the network node may determine the second algorithm, so as to process the second sensing data by using the second algorithm, to obtain the sensing result of the first sensing task. For example, the network node may determine the second algorithm based on the metric of the first sensing task and a fourth mapping relationship. The fourth mapping relationship indicates at least one sensing algorithm and a metric corresponding to each sensing algorithm. The at least one sensing algorithm includes the second algorithm.

In a possible implementation, the method further includes: processing the second sensing data by using the second algorithm, to obtain the sensing result of the first sensing task.

Based on the foregoing possible implementation, the network node may obtain the sensing result of the first sensing task.

In a possible implementation, the determining the second algorithm based on the metric of the first sensing task includes: determining the second algorithm based on the metric of the first sensing task and the first algorithm.

Based on the foregoing possible implementation, the network node may determine the second algorithm based on the metric of the first sensing task and the first algorithm. For example, the network node may determine the second algorithm based on the metric of the first sensing task, the first algorithm, and a fifth mapping relationship. The fifth mapping relationship indicates at least one sensing algorithm, a metric corresponding to each sensing algorithm, and a privacy protection algorithm corresponding to each sensing algorithm. Optionally, the fifth mapping relationship further indicates a privacy protection metric corresponding to each privacy protection algorithm. The at least one sensing algorithm includes the second algorithm, and the privacy protection algorithm in the fifth mapping relationship includes the first algorithm.

In a possible implementation, the method further includes: sending the second sensing data.

Based on the foregoing possible implementation, the network node may further send the second sensing data, so that an apparatus that receives the second sensing data, for example, the service node, may obtain the sensing result of the first sensing task based on the second sensing data.

According to a second aspect, a privacy protection method is provided. The method may be performed by a sensing apparatus. The sensing apparatus herein may be the sensing apparatus, or may be a processor, a module, a logical node, a chip, a chip system, or the like that is in the sensing apparatus and that implements the method. For example, the sensing apparatus is a RAN node or a terminal.

The method includes: obtaining a first algorithm and first sensing data, processing the first sensing data by using the first algorithm to obtain second sensing data, and sending the second sensing data. The first sensing data is data obtained by executing a first sensing task. For example, the first sensing data is data sensed, measured, or detected by executing the first sensing task. The first algorithm is used to filter out first data corresponding to a privacy requirement of a first user from the first sensing data, and the first user is a user that requests to execute the first sensing task.

Based on the method provided in the second aspect, the sensing apparatus may filter out, by using the first algorithm, the first data corresponding to the privacy requirement of the first user (for example, data that the first user wants to protect or data that the first user does not want to disclose) from the first sensing data, so that sent second sensing data does not include the first data, thereby reducing a risk of leakage of user privacy data.

In a possible implementation, the obtaining the first algorithm includes: receiving first information, where the first information is determined based on the privacy requirement of the first user; and determining the first algorithm based on the first information.

Based on the foregoing possible implementation, the sensing apparatus may obtain the first algorithm based on the first information, so as to process the first sensing data by using the first algorithm.

In a possible implementation, the first information includes privacy protection metric information of the first user; or the first information includes information about the first algorithm.

Based on the foregoing possible implementation, the sensing apparatus may determine the first algorithm based on the privacy protection metric information of the first user, or determine the first algorithm based on the information about the first algorithm.

In a possible implementation, the first information is further used to determine at least one of the following: a parameter of the first algorithm or an apparatus for executing the first algorithm.

Based on the foregoing possible implementation, if the first information is used to determine the parameter of the first algorithm, the sensing apparatus may determine the parameter of the first algorithm based on the first information, and process the first sensing data based on the parameter of the first algorithm by using the first algorithm. If the first information is used to determine the apparatus for executing the first algorithm, the sensing apparatus may determine, based on the first information, whether to execute the first algorithm.

In a possible implementation, the first information includes the privacy protection metric information of the first user, and the determining the first algorithm based on the first information includes: negotiating the first algorithm with a first sensing apparatus based on the first information, where the first sensing apparatus is a sensing apparatus for executing the first sensing task.

Based on the foregoing possible implementation, if the first information includes the privacy protection metric information of the first user, the sensing apparatus may negotiate with the first sensing apparatus based on the privacy protection metric information of the first user to determine the first algorithm.

In a possible implementation, the negotiating the first algorithm with the first sensing apparatus based on the first information includes: negotiating the first algorithm with the first sensing apparatus based on the first information and a first mapping relationship, where the first mapping relationship indicates at least one privacy protection algorithm and a privacy protection metric corresponding to each privacy protection algorithm, and the at least one privacy protection algorithm includes the first algorithm.

Based on the foregoing possible implementation, the sensing apparatus may negotiate with the first sensing apparatus based on the privacy protection metric information of the first user and the first mapping relationship to determine the first algorithm. For example, if the first mapping relationship is stored in the first sensing apparatus, the sensing apparatus indicates, to the first sensing apparatus, a privacy protection algorithm supported by the sensing apparatus. The first sensing apparatus determines, based on the first mapping relationship, whether a privacy protection metric corresponding to the privacy protection algorithm supported by the sensing apparatus can meet a privacy protection metric requirement of the first user. If the privacy protection metric can meet the privacy protection metric requirement, the first sensing apparatus indicates the first algorithm to the sensing apparatus, so that the sensing apparatus processes the first sensing data by using the first algorithm. For another example, if the first mapping relationship is stored in the sensing apparatus, the first sensing apparatus indicates, to the sensing apparatus, a privacy protection algorithm supported by the first sensing apparatus. The sensing apparatus determines, based on the first mapping relationship, whether a privacy protection metric corresponding to the privacy protection algorithm supported by the first sensing apparatus can meet a privacy protection metric requirement of the first user. If the privacy protection metric cannot meet the privacy protection metric requirement, the sensing apparatus determines the first algorithm based on the first information and the first mapping relationship.

In a possible implementation, the obtaining the first sensing data includes: executing the first sensing task to obtain the first sensing data.

Based on the foregoing possible implementation, the sensing apparatus may execute the first sensing task to obtain the first sensing data.

In a possible implementation, the obtaining the first sensing data includes: receiving the first sensing data.

Based on the foregoing possible implementation, the sensing apparatus may receive the first sensing data from another apparatus, for example, a sensing apparatus other than the sensing apparatus.

According to a third aspect, a privacy protection method is provided. The method may be performed by a service node. The service node herein may be the service node, or may be a processor, a module, a logical node, a chip, a chip system, or the like that is in the service node and that implements the method. For example, the service node is a server, a cloud server, an application server, an application function network element, a terminal, or the like.

The method includes: sending privacy requirement information of a first user that corresponds to a first sensing task, and obtaining a sensing result of the first sensing task. The first user is a user that requests to execute the first sensing task. The sensing result of the first sensing task is obtained based on second sensing data. The second sensing data is obtained by filtering out first data corresponding to a privacy requirement of the first user from first sensing data. The first sensing data is data obtained by executing the first sensing task. For example, the first sensing data is data sensed, measured, or detected by executing the first sensing task.

Based on the method provided in the third aspect, the service node may send the privacy requirement information of the first user, so that a node in a RAN filters out the first data corresponding to the privacy requirement of the first user from the first sensing data, thereby reducing a risk of leakage of user privacy data.

In a possible implementation, the obtaining the sensing result of the first sensing task includes: receiving the second sensing data; and processing the second sensing data by using a second algorithm, to obtain the sensing result of the first sensing task.

Based on the foregoing possible implementation, the service node may determine the sensing result of the first sensing task by itself.

In a possible implementation, the method further includes: determining a metric of the first sensing task; and determining the second algorithm based on the metric of the first sensing task.

Based on the foregoing possible implementation, the service node may determine the second algorithm, so as to process the second sensing data by using the second algorithm, to obtain the sensing result of the first sensing task. For example, the service node may determine the second algorithm based on the metric of the first sensing task and a fourth mapping relationship. The fourth mapping relationship indicates at least one sensing algorithm and a metric corresponding to each sensing algorithm. The at least one sensing algorithm includes the second algorithm.

In a possible implementation, the determining the second algorithm based on the metric of the first sensing task includes: determining the second algorithm based on the metric of the first sensing task and a first algorithm, where the first algorithm is used to filter out the first data corresponding to the privacy requirement of the first user from the first sensing data.

Based on the foregoing possible implementation, the service node may determine the second algorithm based on the metric of the first sensing task and the first algorithm. For example, the service node may determine the second algorithm based on the metric of the first sensing task, the first algorithm, and a fifth mapping relationship. The fifth mapping relationship indicates at least one sensing algorithm, a metric corresponding to each sensing algorithm, a privacy protection algorithm corresponding to each sensing algorithm, and a privacy protection metric corresponding to the privacy protection algorithm. The at least one sensing algorithm includes the second algorithm, and the privacy protection algorithm in the fifth mapping relationship includes the first algorithm.

In a possible implementation, the obtaining the sensing result of the first sensing task includes: receiving the sensing result of the first sensing task.

Based on the foregoing possible implementation, the service node may receive the sensing result of the first sensing task from another apparatus, for example, a network element in a core network.

According to a fourth aspect, a communication apparatus is provided, to implement the foregoing method. The communication apparatus may be the network node in the first aspect; the communication apparatus may be the sensing apparatus in the second aspect; or the communication apparatus may be the service node in the third aspect. The communication apparatus includes a corresponding module, unit, or means (means) for implementing the foregoing method. The module, unit, or means may be implemented by using hardware, software, or hardware executing corresponding software. The hardware or the software includes one or more modules or units corresponding to the foregoing functions.

In a possible implementation, the communication apparatus may include a processing module and an interface module. The processing module may be configured to implement a processing function in any one of the foregoing aspects and the possible implementations of the foregoing aspects. The processing module may be, for example, a processor. The interface module may also be referred to as an interface unit, and is configured to implement a sending function and/or a receiving function in any one of the foregoing aspects and the possible implementations of the foregoing aspects. The interface module may include an interface circuit, a transceiver machine, a transceiver, or a communication interface.

In a possible implementation, the interface module includes a sending module and a receiving module that are respectively configured to implement sending and receiving functions in any one of the foregoing aspects and the possible implementations of the foregoing aspects.

According to a fifth aspect, a communication apparatus is provided, including a processor configured to cause, by executing a computer program (or computer-executable instructions) stored in a memory and/or by using a logic circuit, the apparatus to perform the method in any one of the foregoing aspects and the possible implementations of the aspects. The communication apparatus may be the network node in the first aspect; the communication apparatus may be the sensing apparatus in the second aspect; or the communication apparatus may be the service node in the third aspect.

In a possible implementation, the communication apparatus further includes the memory.

In a possible implementation, the processor and the memory are integrated together.

In a possible implementation, the memory is located outside the communication apparatus.

In a possible implementation, the communication apparatus further includes a communication interface, and the communication interface is used by the communication apparatus to communicate with another device, for example, to send or receive data and/or a signal. For example, the communication interface may be a transceiver, a circuit, a bus, a module, or another type of communication interface.

In a possible implementation, the communication apparatus is a chip or a chip system. Optionally, when the communication apparatus is the chip system, the communication apparatus may include a chip, or may include a chip and another discrete device.

According to a sixth aspect, a communication apparatus is provided, including a processor and an interface circuit, where the processor is configured to execute a computer program or instructions, so that the communication apparatus performs the method according to any one of the foregoing aspects. The communication apparatus may be the network node in the first aspect; the communication apparatus may be the sensing apparatus in the second aspect; or the communication apparatus may be the service node in the third aspect.

In a possible implementation, the communication apparatus is a chip or a chip system. Optionally, when the communication apparatus is the chip system, the communication apparatus may include a chip, or may include a chip and another discrete device.

According to a seventh aspect, a computer-readable storage medium is provided. The computer-readable storage medium stores instructions. When the instructions are run on a computer, the computer is enabled to perform the method according to any one of the foregoing aspects.

According to an eighth aspect, a computer program product including instructions is provided. When the computer program product is run on a computer, the computer is enabled to perform the method according to any one of the foregoing aspects.

According to a ninth aspect, a communication system is provided. The communication system includes a network node configured to perform the method in the first aspect and a sensing apparatus configured to perform the method in the second aspect.

In a possible implementation, the communication system further includes a service node configured to perform the method in the third aspect.

For technical effects achieved by any one of the possible implementations of the fourth aspect to the ninth aspect, refer to the technical effects achieved by any one of the first aspect to the third aspect or the different possible implementations of the first aspect to the third aspect. Details are not described herein again.

It may be understood that the solutions in the foregoing aspects may be combined if the solutions are not contradictory.

### BRIEF DESCRIPTION OF DRAWINGS

FIG. 1A is a diagram 1 of a sensing mode according to this application;
FIG. 1B is a diagram 2 of a sensing mode according to this application;
FIG. 1C is a diagram 1 of a sensing result transmission process according to this application;
FIG. 1D is a diagram 2 of a sensing result transmission process according to this application;
FIG. 2A is a diagram of an architecture of a communication system according to this application;
FIG. 2B is a diagram 1 of a communication network according to this application;
FIG. 2C is a diagram 2 of a communication network according to this application;
FIG. 2D is a diagram 3 of a communication network according to this application;
FIG. 2E is a diagram 4 of a communication network according to this application;
FIG. 3 is a diagram of a hardware structure of a communication apparatus according to this application;
FIG. 4 is a schematic flowchart 1 of a privacy protection method according to this application;
FIG. 5 is a schematic flowchart 2 of a privacy protection method according to this application;
FIG. 6 is a schematic flowchart 3 of a privacy protection method according to this application;
FIG. 7 is a schematic flowchart 4 of a privacy protection method according to this application;
FIG. 8 is a schematic flowchart 5 of a privacy protection method according to this application;
FIG. 9 is a schematic flowchart 6 of a privacy protection method according to this application; and
FIG. 10 is a diagram of a structure of a communication apparatus according to this application.

### DESCRIPTION OF EMBODIMENTS

Before technical solutions of this application are described, related technical terms in this application are described. It may be understood that the descriptions are intended to make this application easier to understand, but should not be construed as a limitation on the protection scope claimed in this application.

### 1. Sensing

Sensing is to obtain feature information of a target (for example, information related to a location of the target, behavior of the target, or a physiological feature of the target). For example, a sensing apparatus may send a sensing signal, receive an echo signal (or a reflected signal) that is of the sensing signal reaching the target and that is reflected by the target, and obtain sensing data based on the echo signal. The sensing data is measurement data obtained based on the echo signal, and may be used to determine the feature information of the target, namely, a sensing result. In this application, the target may include a user. In a possible implementation, sensing and communication are performed together.

### 2. Sensing apparatus

In this application, the sensing apparatus may be configured to sense a target. The sensing apparatus may be any apparatus that has a sensing capability and a communication capability. For example, the sensing apparatus is a RAN node or a terminal.

The RAN node in this application may also be referred to as a RAN device, a network device, or the like. The RAN node includes but is not limited to: an evolved NodeB (NodeB, eNB, or e-NodeB, evolutional NodeB) in long term evolution (long term evolution, LTE), an evolved NodeB in next-generation LTE (next-generation eNB, ng-eNB), a NodeB (gNodeB or gNB) in new radio (new radio, NR), a transmitting point (transmitting point, TP) or a transmission reception point (transmission receiving point/transmission reception point, TRP), a subsequent evolved base station in the 3rd generation partnership project (3rd generation partnership project, 3GPP), a next-generation NodeB (next-generation NodeB, gNB), a next-generation base station in a communication system evolved after 5G, for example, a 6th generation (6th generation, 6G) mobile communication system, a base station in a future mobile communication system, an access point (access point, AP) in a wireless fidelity (wireless fidelity, Wi-Fi) system, a wireless relay node, a wireless backhaul node, an integrated access and backhaul (integrated access and backhaul, IAB) node, a router, and the like. The base station may be a macro base station, a micro base station, a pico base station, a small cell, a relay station, a balloon station, or the like. A plurality of base stations may support networks of a same technology mentioned above, or may support networks of different technologies mentioned above. The base station may include one or more co-site or non-co-site TRPs. The RAN node may alternatively be a device that functions as a base station in device to device (device to device, D2D) communication, internet of vehicles communication, uncrewed aerial vehicle communication, or machine communication. Alternatively, the RAN node may alternatively be a radio controller in a cloud radio access network (cloud radio access network, CRAN) scenario. The RAN node may alternatively be a central unit (central unit, CU), a distributed unit (distributed unit, DU), a CU-control plane (control plane, CP), a CU-user plane (user plane, UP), a radio unit (radio unit, RU), a road side unit (road side unit, RSU) with a function of the base station, a wired access gateway, a core network element, or the like. Alternatively, the RAN node may be a server, a wearable device, a machine communication device, a vehicle-mounted device, or the like. For example, a RAN node in a vehicle-to-everything (vehicle-to-everything, V2X) technology may be a road side unit (road side unit, RSU).

In this application, the CU and the DU may be separately arranged, or may be included in a same network element, for example, a baseband unit (baseband unit, BBU). The RU may be included in a radio device or a radio unit, for example, included in a remote radio unit (remote radio unit, RRU), an active antenna processing unit (active antenna unit, AAU), or a remote radio head (remote radio head, RRH). It may be understood that the CU may be classified into a network device in an access network, or the CU may be classified into a network device in a core network. This is not limited herein.

It may be understood that in different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. In addition, any one of the CU (or the CU-CP or the CU-UP), the DU, and the RU in this application may be implemented by using a software module, a hardware module, or a combination of a software module and a hardware module.

The terminal in this application may be deployed on land, including an indoor or outdoor device, or a handheld or vehicle-mounted device; may be deployed on a water surface (for example, a ship); or may be deployed in the air (for example, on an airplane, a balloon, or a satellite). The terminal may also be referred to as a terminal device. The terminal device may be user equipment (user equipment, UE), a mobile station (mobile station, MS), a mobile terminal (mobile terminal, MT), a station, or the like, or may be a device configured to provide voice or data connectivity for a user. The UE includes a handheld device with a wireless communication function, a vehicle-mounted device (for example, a device disposed in a car, a bicycle, an electric vehicle, an airplane, a ship, a train, or a high-speed train), a wearable device (for example, a smart watch, a smart band, or a pedometer), or a compute device. For example, the UE may be a mobile phone (mobile phone), a mobile internet device (mobile internet device, MID), or a computer with a wireless transceiver function. The UE may alternatively be a virtual reality (virtual reality, VR) terminal device, an augmented reality (augmented reality, AR) terminal device, a wireless modem (modem), a smart point of sale (point of sale, POS) machine, customer-premises equipment (customer-premises equipment, CPE), a smart robot, a robot arm, a workshop device, a wireless terminal in industrial control, a wireless terminal in self-driving, a wireless terminal in a smart grid (smart grid), a wireless terminal in transportation security, a wireless terminal in a smart city (smart city), a vehicle-mounted terminal, a road side unit (road side unit, RSU) having a terminal function, a flight device (for example, a smart robot, a hot air balloon, an uncrewed aerial vehicle, or an airplane), or the like. The terminal may alternatively be another device having a terminal function. For example, the terminal may alternatively be a device that functions as a terminal in D2D communication.

The terminal in this application may be a vehicle-mounted module, a vehicle-mounted sub-assembly, a vehicle-mounted component, a vehicle-mounted chip, an on-board unit (on-board unit, OBU), or a telematics box (telematics box, T-BOX) that is built in a vehicle as one or more components or units. The vehicle can implement the method in this application by using the vehicle-mounted module, the vehicle-mounted sub-assembly, the vehicle-mounted component, the vehicle-mounted chip, the vehicle-mounted unit, or the T-box that is built in the vehicle. Alternatively, the terminal may be an entire vehicle apparatus. Therefore, this application may be applied to the internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

It may be understood that, in some scenarios, roles of the RAN node and the terminal are relative. For example, a helicopter or an uncrewed aerial vehicle that is usually configured as a terminal may alternatively be configured as a mobile base station, and a device that accesses the RAN node through the helicopter or the uncrewed aerial vehicle is configured as a terminal.

### 3. Sensing mode

In this application, the sensing mode is a mode in which a sensing apparatus senses a target, including a single-station sensing mode, a dual-station sensing mode, or a multi-station sensing mode. The single-station sensing mode, the dual-station sensing mode, and the multi-station sensing mode are distinguished based on a quantity of sensing apparatuses and whether apparatuses that transmit and receive signals are the same. Details are described below.

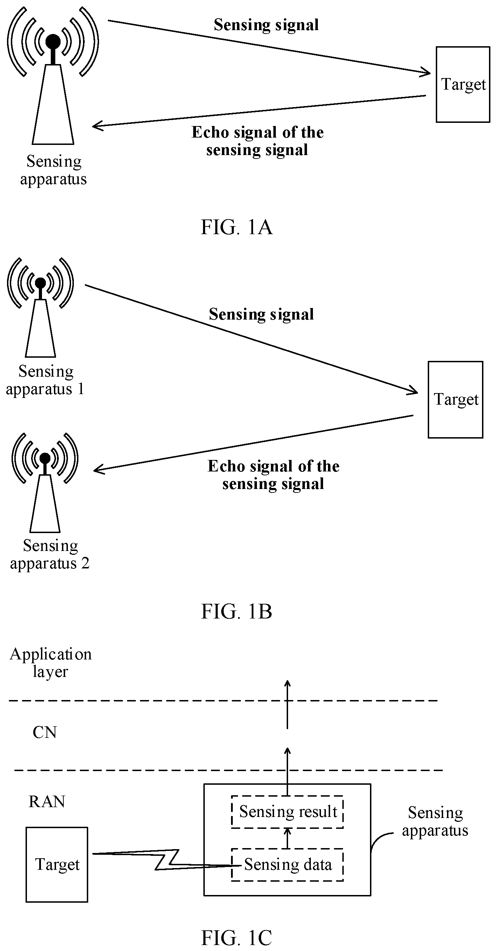

The single-station sensing mode is a mode in which a target is sensed through one sensing apparatus. In other words, in the single-station sensing mode, sensing apparatuses that transmit and receive signals are the same. For example, in FIG. 1A, a sensing apparatus may send a sensing signal, receive an echo signal of the sensing signal, and obtain sensing data based on the echo signal. The sensing data may be used to determine a sensing result. The sensing apparatus in FIG. 1A is, for example, a RAN node or a terminal.

The dual-station sensing mode is a mode in which a target is sensed through two sensing apparatuses. In other words, in the dual-station sensing mode, sensing apparatuses that transmit and receive signals are different. For example, in FIG. 1B, a sensing apparatus 1 may send a sensing signal. The sensing signal reaches a target, is reflected by the target to form an echo signal, and is received by a sensing apparatus 2. Subsequently, the sensing apparatus 2 may obtain sensing data based on the echo signal, and the sensing data may be used to determine a sensing result. The sensing apparatus 1 is different from the sensing apparatus 2. For example, the sensing apparatus 1 and the sensing apparatus 2 are different RAN nodes; the sensing apparatus 1 and the sensing apparatus 2 are different terminals; the sensing apparatus 1 is a RAN node, and the sensing apparatus 2 is a terminal; or the sensing apparatus 1 is a terminal, and the sensing apparatus 2 is a RAN node.

The multi-station sensing mode is a mode in which a target is sensed through three or more sensing apparatuses. In these sensing apparatuses, one part of sensing apparatuses are configured to send a sensing signal, and the other part of sensing apparatuses are configured to receive an echo signal of the sensing signal, and obtain sensing data based on the echo signal. All of the sensing data may be used to determine a sensing result. Three sensing apparatuses are used as an example. One of the sensing apparatuses sends a sensing signal, and the other two sensing apparatuses receive an echo signal of the sensing signal, and obtain sensing data based on the echo signal. Alternatively, two of the sensing apparatuses send sensing signals, and the other sensing apparatus separately receives echo signals of the sensing signals sent by the two sensing apparatuses, and obtains sensing data based on the echo signals.

This application is mainly described by using examples in which a target is sensed in the single-station sensing mode and a target is sensed in the dual-station sensing mode. Logic of sensing a target in the multi-station sensing mode is similar to logic of sensing a target in the dual-station sensing mode, and a difference lies in a quantity of sensing apparatuses that send a signal and/or a quantity of sensing apparatuses that receive a signal. Therefore, for descriptions of sensing a target in the multi-station sensing mode, refer to the descriptions of sensing a target in the dual-station sensing mode in this application. Details are not described again.

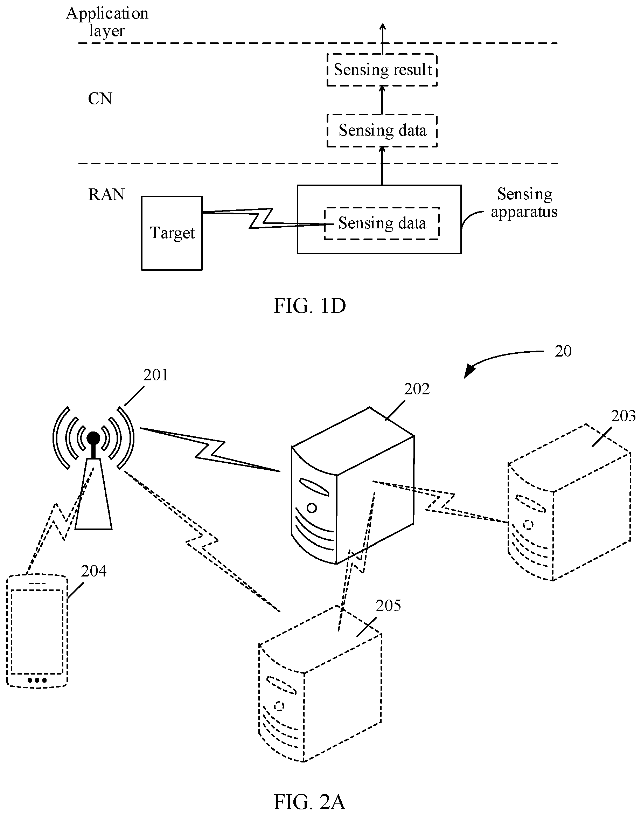

It may be understood that sensing data obtained by a sensing apparatus in any one of the foregoing sensing modes may be processed on a RAN side to obtain a sensing result. For example, the sensing apparatus performs processing to obtain the sensing result. For example, in FIG. 1C, a sensing apparatus may determine a sensing result based on sensing data, and send the sensing result to a core network (core network, CN), so that the CN sends the received sensing result to an application layer, for example, an application server. Alternatively, after obtaining sensing data, the sensing apparatus sends the sensing data to a network node in a RAN other than the sensing apparatus for processing, to obtain a sensing result. Alternatively, sensing data obtained by the sensing apparatus through any one of the foregoing sensing modes may be processed on a core network (core network, CN) side, to obtain a sensing result. For example, in FIG. 1D, a sensing apparatus may send sensing data to a CN. After receiving the sensing data, the CN may determine a sensing result based on the sensing data, and send the sensing result to an application layer, for example, an application server.

In conclusion, if the sensing data is processed on the CN side, the sensing apparatus needs to send the sensing data to the CN. If a target sensed by the sensing apparatus includes a user, the foregoing sensing data includes data related to the user. This increases a risk of leakage of user privacy data.

To resolve the foregoing problem, this application provides a privacy protection method. In the method, a network node may obtain a privacy requirement of a first user, and send first information to a RAN based on the privacy requirement of the first user. The first user is a user that requests to execute a first sensing task, the first information is used to determine a first algorithm, the first algorithm is used to filter out first data corresponding to the privacy requirement of the first user (for example, data that the first user wants to protect or data that the first user does not want to disclose) from first sensing data, and the first sensing data is data obtained by executing the first sensing task. In this way, a sensing apparatus may obtain the first algorithm, process the first sensing data by using the first algorithm to obtain second sensing data, and send the second sensing data.

It may be understood that, in the foregoing method, the sensing apparatus may filter out, from the first sensing data by using the first algorithm, the data that the first user does not want to disclose, so that the sent second sensing data does not include the data, thereby reducing a risk of leakage of user privacy data.

The method provided in this application may be applied to various communication systems. For example, the communication system may be an LTE system, a 5th generation (5th generation, 5G) communication system, a Wi-Fi system, a 3GPP-related communication system, a communication system evolved after 5G (for example, a 6G communication system), or a system integrating a plurality of systems. This is not limited. 5G may also be referred to as NR. The following uses a communication system 20 shown in FIG. 2A as an example to describe the method provided in this application. FIG. 2A is merely a diagram, and does not constitute a limitation on an application scenario of the technical solutions provided in this application.

FIG. 2A is a diagram of an architecture of the communication system 20 according to this application. In FIG. 2A, the communication system 20 may include a sensing apparatus 201 and a network node 202 that can communicate with the sensing apparatus 201. For descriptions of the sensing apparatus 201, refer to the foregoing descriptions of the sensing apparatus. Details are not described herein again. The network node 202 may be a core network element, for example, a sensing service control network element, a sensing data processing network element, a newly added core network element, or a network element that has both a sensing service control function and a sensing data processing function.

In this application, the sensing service control network element has a sensing service control function, and may be configured to manage a sensing service. For example, the sensing service control network element may be used by the sensing apparatus to register a capability of the sensing apparatus, and may be configured to orchestrate a sensing service based on information registered by the sensing apparatus, for example, determine a sensing apparatus that sends a sensing signal and a sensing apparatus that receives an echo signal in the sensing service. The sensing service control network element may communicate with a network element in a CN through a service-based interface (service-based interface, SBI), or an independent interface may be defined. Optionally, the sensing service control network element may further register, with an NRF network element, a service that can be provided by the sensing service control network element. For example, the sensing service control network element is a sensing service control function (sensing service control function, SSCF) network element.

In this application, the sensing data processing network element has a sensing data processing function, and may be configured to process data of a sensing service (for example, an ISAC service). For example, the sensing data processing network element may obtain a sensing result based on sensed or measured data. The sensing data processing network element communicates with the network element in the CN through an SBI interface, or an independent interface may be defined. For example, the sensing data processing network element is a sensing data processing function (sensing data process function, SDPF) network element. It may be understood that the SSCF network element is merely an example of the sensing service control network element, and the SDPF network element is merely an example of the sensing data processing network element. Names of the network elements are not limited in this application.

In some embodiments, the network node 202 may obtain a privacy requirement of a first user, and indicate a first algorithm to the sensing apparatus 201 based on the privacy requirement of the first user. The sensing apparatus 201 may obtain the first algorithm and first sensing data, process the first sensing data by using the first algorithm to obtain second sensing data, and send the second sensing data to the network node 202.

Optionally, the communication system 20 further includes at least one of the following: a service node 203 that can communicate with the network node 202, a sensing apparatus 204 that can communicate with the sensing apparatus 201, or a network node 205 that can communicate with the sensing apparatus 201 and the network node 202.

In some embodiments, the sensing apparatus 204 and the sensing apparatus 201 may jointly execute a first sensing task to obtain the first sensing data. For descriptions of the sensing apparatus 204, refer to the foregoing descriptions of the sensing apparatus. Details are not described again.

In some embodiments, the network node 205 is configured to forward data between the sensing apparatus (for example, the sensing apparatus 201 and/or the sensing apparatus 204) and the network node 202. For example, the network node 205 may send first information received from the network node 202 to the sensing apparatus 201. Optionally, the network node 205 may be configured to process data of a sensing service. For example, the network node 205 may obtain a sensing result of the first sensing task based on the second sensing data. The network node 205 may be a core network element, for example, a sensing data processing network element, an access and mobility management function (access and mobility management function, AMF) network element, or a newly added network element.

In some embodiments, the service node 203 may initiate, to the CN, a request for executing the first sensing task. The service node 203 may further send privacy requirement information of the first user to the network node 202. The service node 203 may further receive the sensing result of the first sensing task, or receive the second sensing data, and determine the sensing result of the first sensing task based on the second sensing data. The service node 203 may be an apparatus having a computing capability and a communication capability, for example, a server, a cloud server, an application server, an application function network element, or a terminal.

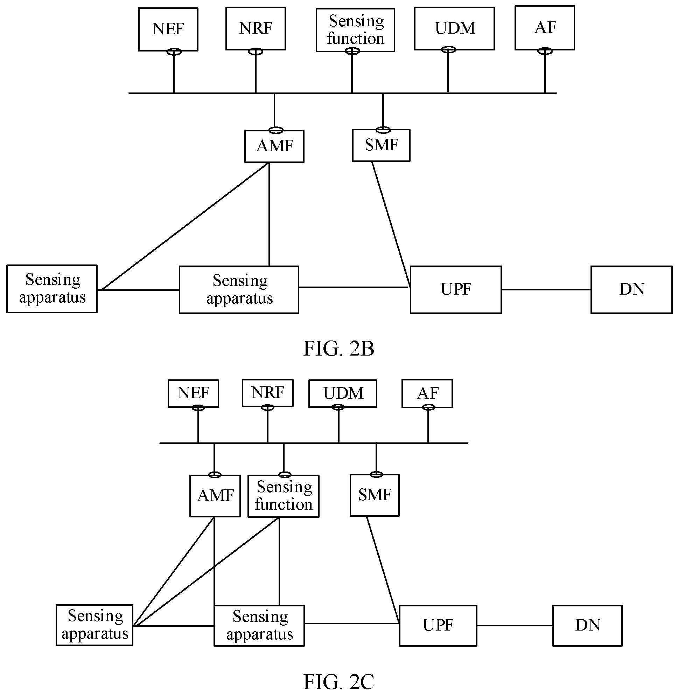

It may be understood that the communication system 20 may be used in a plurality of communication networks. The following uses communication networks shown in FIG. 2B to FIG. 2E as examples for description.

The communication network shown in FIG. 2B includes a network exposure function (network exposure function, NEF) network element, an NRF network element, a sensing function (sensing function, SF) network element, a UDM network element, an AF network element, an AMF network element, a session management function (session management function, SMF) network element, a user plane function (user plane function, UPF) network element, a data network (data network, DN), and sensing apparatuses. Network elements such as the AMF network element, the SMF network element, the NEF network element, the NRF network element, the SF network element, the UDM network element, and the AF network element may interact with each other through a service-based interface. The sensing apparatuses may communicate with the AMF network element, the SMF network element may communicate with the UPF network element, and the UPF network element may access the DN. The sensing function network element may have a sensing service control function and a sensing data processing function.

It may be understood that devices or entities corresponding to the sensing apparatus 201 and the sensing apparatus 204 in the communication system 20 are the sensing apparatuses in the communication network shown in FIG. 2B. A network element or an entity corresponding to the network node 202 in the communication system 20 is the sensing function network element in the communication network shown in FIG. 2B. A device or an entity corresponding to the service node 203 in the communication system 20 is the AF network element in the communication network shown in FIG. 2B. A device or an entity corresponding to the network node 205 in the communication system 20 is the AMF network element in the communication network shown in FIG. 2B.

The communication network shown in FIG. 2C includes an NEF network element, an NRF network element, a sensing function network element, a UDM network element, an AF network element, an AMF network element, an SMF network element, a UPF network element, a DN, and sensing apparatuses Network elements such as the AMF network element, the SMF network element, the NEF network element, the NRF network element, the SF network element, the UDM network element, and the AF network element may interact with each other through a service-based interface. The sensing apparatuses may communicate with the AMF network element and the SF network element, the SMF network element may communicate with the UPF network element, and the UPF network element may access the DN. The sensing function network element may have a sensing service control function and a sensing data processing function.

It may be understood that devices or entities corresponding to the sensing apparatus 201 and the sensing apparatus 204 in the communication system 20 are the sensing apparatuses in the communication network shown in FIG. 2C. A network element or an entity corresponding to the network node 202 in the communication system 20 is the sensing function network element in the communication network shown in FIG. 2C. A device or an entity corresponding to the service node 203 in the communication system 20 is the AF network element in the communication network shown in FIG. 2C.

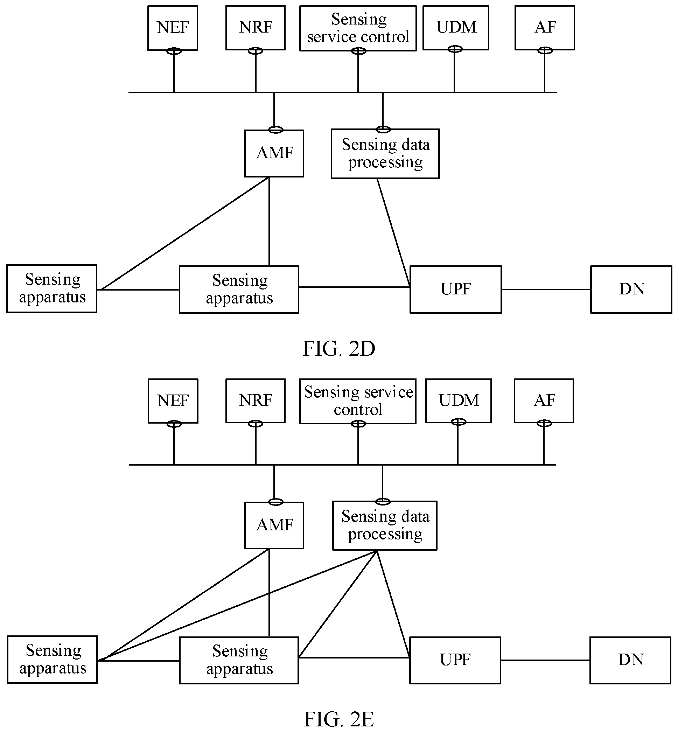

The communication network shown in FIG. 2D includes an NEF network element, an NRF network element, a sensing service control network element, a UDM network element, an AF network element, an AMF network element, a sensing data processing network element, a UPF network element, a DN, and sensing apparatuses. Network elements such as the AMF network element, the sensing data processing network element, the NEF network element, the NRF network element, the sensing service control network element, the UDM network element, or the AF network element may interact with each other through a service-based interface. The sensing apparatuses may communicate with the AMF network element, the sensing data processing network element may communicate with the UPF network element, and the UPF network element may access the DN.

It may be understood that devices or entities corresponding to the sensing apparatus 201 and the sensing apparatus 204 in the communication system 20 are the sensing apparatuses in the communication network shown in FIG. 2D. A network element or an entity corresponding to the network node 202 in the communication system 20 is the sensing service control network element in the communication network shown in FIG. 2D. A device or an entity corresponding to the service node 203 in the communication system 20 is the AF network element in the communication network shown in FIG. 2D. A device or an entity corresponding to the network node 205 in the communication system 20 is the AMF network element in the communication network shown in FIG. 2D.

The communication network shown in FIG. 2E includes an NEF network element, an NRF network element, a sensing service control network element, a UDM network element, an AF network element, an AMF network element, a sensing data processing network element, a UPF network element, a DN, and sensing apparatuses. Network elements such as the AMF network element, the sensing data processing network element, the NEF network element, the NRF network element, the sensing service control network element, the UDM network element, or the AF network element may interact with each other through a service-based interface. The sensing apparatuses may communicate with the AMF network element and the sensing data processing network element, the sensing data processing network element may communicate with the UPF network element, and the UPF network element may access the DN.

It may be understood that devices or entities corresponding to the sensing apparatus 201 and the sensing apparatus 204 in the communication system 20 are the sensing apparatuses in the communication network shown in FIG. 2E. A network element or an entity corresponding to the network node 202 in the communication system 20 is the sensing service control network element in the communication network shown in FIG. 2E. A device or an entity corresponding to the service node 203 in the communication system 20 is the AF network element in the communication network shown in FIG. 2E. A device or an entity corresponding to the network node 205 in the communication system 20 is the sensing data processing network element in the communication network shown in FIG. 2E.

The communication system 20 shown in FIG. 2A is merely used as an example, but is not intended to limit the technical solutions of this application. A person skilled in the art should understand that, during specific implementation, the communication system 20 may further include another device, and a quantity of sensing apparatuses, network nodes, or service nodes may be determined based on a specific requirement. This is not limited.

Optionally, each network element or device (for example, the sensing apparatus, the network node, or the service node) in FIG. 2A in this application may also be referred to as a communication apparatus, and may be a general-purpose device or a dedicated device. This is not specifically limited in this application.

Optionally, related functions of each network element or device (for example, the sensing apparatus, the network node, or the service node) in FIG. 2A in this application may be implemented by one device, may be jointly implemented by a plurality of devices, or may be implemented by one or more functional modules in one device. This is not specifically limited in this application. It can be understood that the foregoing function may be a network component in a hardware device, a software function running on dedicated hardware, a combination of hardware and software, or a virtualized function instantiated on a platform (for example, a cloud platform).

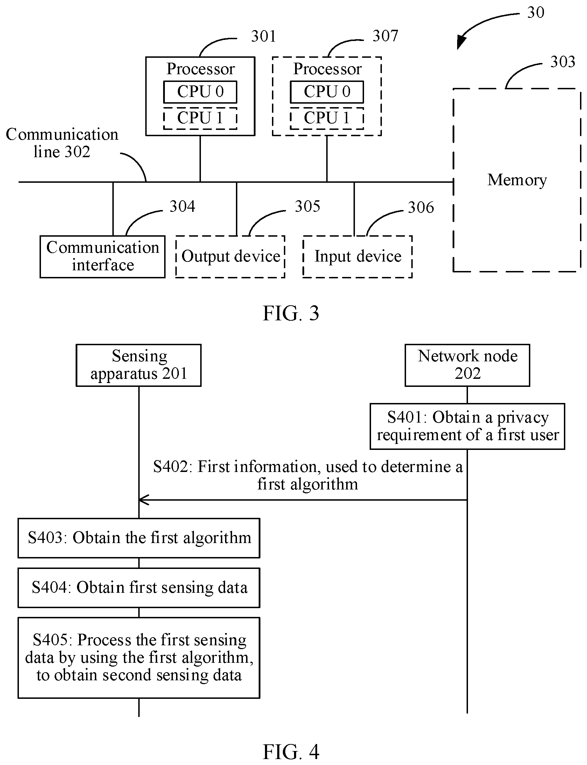

During specific implementation, each network element or device (for example, the sensing apparatus, the network node, or the service node) in FIG. 2A in this application may use a composition structure shown in FIG. 3, or include components shown in FIG. 3. FIG. 3 is a diagram of a hardware structure of a communication apparatus applicable to this application. The communication apparatus 30 includes at least one processor 301 and at least one communication interface 304, to implement the method provided in this application. The communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transferring information between the foregoing components, for example, a bus.

The communication interface 304 is configured to communicate with another device or a communication network. The communication interface 304 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The memory 303 may be a read-only memory (read-only memory, ROM) or another type of static storage device that can store static information and instructions, or a random access memory (random access memory, RAM), a cache (cache) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of instructions or a data structure and can be accessed by a computer, but is not limited thereto. The memory may exist independently, and is coupled to the processor 301 through the communication line 302. The memory 303 may alternatively be integrated with the processor 301. Usually, the memory provided in this application may be non-volatile.

The memory 303 is configured to store computer-executable instructions for performing the solutions provided in this application, and the processor 301 controls execution of the computer-executable instructions. The processor 301 is configured to execute the computer-executable instructions stored in the memory 303, to implement the method provided in this application. Alternatively, optionally, in this application, the processor 301 may perform a processing-related function in the following method provided in this application, and the communication interface 304 is responsible for communicating with another device or a communication network. This is not specifically limited in this application.

Optionally, the processor 301 and/or the memory 303 may include an artificial intelligence (artificial intelligent, AI) module, and the AI module may be configured to implement an AI-related function. The AI module may be implemented by using software, hardware, or a combination of software and hardware.

Optionally, the computer-executable instructions in this application may also be referred to as application program code. This is not specifically limited in this application.

The coupling in this application is an indirect coupling or communication connection between apparatuses, units, or modules; may be an electrical, mechanical, or another form; and is used for information exchange between apparatuses, units, or modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive an input of a user in a plurality of manners. For example, the input device 306 may be a mouse, a keyboard, a touchscreen device, or a sensing device.

It may be understood that the composition structure shown in FIG. 3 does not constitute a limitation on the communication apparatus. In addition to the components shown in FIG. 3, the communication apparatus may include more or fewer components than those shown in the figure, or some components may be combined, or different component arrangements may be used.

The following describes the method provided in this application with reference to the accompanying drawings. Network elements in the following embodiments may have the components shown in FIG. 3. Details are not described again.

It may be understood that names of messages between network elements, names of parameters in messages, or the like in the following embodiments of this application are merely examples, and there may alternatively be other names during specific implementation. This is not specifically limited in this application.

It may be understood that "sending information to... (for example, a sensing apparatus)" in this application may be understood as that a destination end of the information is the sensing apparatus, and may include directly or indirectly sending the information to the sensing apparatus. "Receiving information from... (for example, a sensing apparatus)" may be understood as that a source end of the information is the sensing apparatus, and may include directly or indirectly receiving the information from the sensing apparatus. Information may undergo necessary processing, for example, a format change, between a source end for sending the information and a destination end. However, the destination end may understand valid information from the source end. Similar expressions in this application may be understood similarly, and details are not described herein again.

It may be understood that, in this application, "/" may indicate an "or" relationship between associated objects. For example, A/B may indicate A or B. "And/or" may be used to describe three relationships between associated objects. For example, A and/or B may indicate three cases: Only A exists, both A and B exist, and only B exists. A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of the technical solutions of this application, in this application, the terms "first", "second", and the like may be used to distinguish between technical features with a same function or similar functions. The terms such as "first" and "second" do not limit a quantity and an execution sequence, and the terms such as "first" and "second" do not limit a definite difference. In this application, terms such as "example" or "for example" are used to represent giving an example, an illustration, or a description. Any embodiment or design scheme described with "example" or "for example" should not be explained as being more preferred or having more advantages than another embodiment or design scheme. Use of the terms such as "example" or "for example" is intended to present a related concept in a specific manner for ease of understanding.

It may be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of this application.

It may be understood that, in this application, "when", "in a case in which", "if", and "it is assumed that" mean that corresponding processing is performed in an objective situation, are not intended to limit time, do not require a necessary determining action during implementation, and do not mean any other limitation.

"Simultaneously" in this application may be understood as being at a same time point, may be understood as being in a time period, or may be understood as being in a same periodicity.

In this application, "greater than or equal to" may be replaced with "greater than" or "equal to"; and "less than or equal to" may be replaced with "less than" or "equal to". For example, that A is greater than or equal to B may be replaced with that A is greater than B, or A is equal to B. That A is less than or equal to B may be replaced with that A is less than B, or A is equal to B.

It may be understood that in some scenarios, some optional features in this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in this application may also correspondingly implement these features or functions. Details are not described herein.

It may be understood that, in this application, a same step, or steps or technical features that have a same function may be mutually referenced between different embodiments.

It may be understood that processing of personal information of a user in this application, such as collection, storage, use, processing, transmission, provision, and disclosure, complies with relevant laws and regulations, and does not violate public order and morals.

It may be understood that, in this application, a sensing apparatus (for example, the sensing apparatus 201 or the sensing apparatus 204), and/or a network node (for example, the network node 202 or the network node 205), and/or a service node (for example, the service node 203) may perform some or all of the steps in this application. These steps are merely examples, and other operations or variations of various operations may be further performed in this application. In addition, the steps may be performed in a sequence different from that presented in this application, and not all the steps in this application may be performed.

It may be understood that in the following method provided in this application, an example in which a sensing apparatus, a network node, and a service node are used as execution bodies of an interaction example is used to illustrate the method. However, the execution bodies of the interaction example are not limited in this application. For example, a sensing apparatus in the method provided in the following embodiments of this application may alternatively be a chip, a chip system, or a processor that supports the sensing apparatus in implementing the method, or may be a logical node, a logical module, or software that can implement all or some functions of the sensing apparatus. A network node in the following method provided in this application may be a chip, a chip system, or a processor that supports the network node in implementing the method, or may be a logical node, a logical module, or software that can implement all or some functions of the network node. A service node in the following method provided in this application may be a chip, a chip system, or a processor that supports the service node in implementing the method, or may be a logical node, a logical module, or software that can implement all or some functions of the service node.

FIG. 4 shows a privacy protection method according to this application. The method may include the following steps.

S401: A network node 202 obtains a privacy requirement of a first user.

In this application, the privacy requirement of the first user indicates first data. The first user is a user that requests to execute a first sensing task. The first data is data related to the first user. For example, the first data is data that the first user wants to protect, or data that the first user does not want to leak or disclose. For example, the first data may be data related to a physiological feature of the first user, and/or data related to behavior of the first user, and/or data related to a location of the first user. For example, the privacy requirement of the first user indicates to protect breathing data of the first user (or skip detecting breathing of the first user), and/or the privacy requirement of the first user indicates to protect behavior data of the first user (or skip identifying the behavior of the first user), and/or the privacy requirement of the first user indicates to protect positioning data of the first user (or skip identifying the location of the first user).

In this application, the network node 202 may obtain the privacy requirement of the first user in a plurality of manners. For example, the network node 202 obtains the privacy requirement of the first user from a service node 203, or obtains the privacy requirement of the first user from a network element in a CN other than the network node 202, or locally obtains the privacy requirement of the first user. Details are described below.

Manner 1: The network node 202 obtains the privacy requirement of the first user from the service node 203.

In a possible implementation, the service node 203 sends privacy requirement information of the first user to the network node 202. After receiving the privacy requirement information of the first user, the network node 202 determines the privacy requirement of the first user based on the privacy requirement information of the first user. In this application, the privacy requirement information of the first user indicates the privacy requirement of the first user.

In a possible design, the privacy requirement information of the first user includes a type identifier of the foregoing first data.

For example, a type identifier of the breathing data is 00, a type identifier of heartbeat data is 01, a type identifier of the behavior data is 10, and a type identifier of the positioning data is 11. If the privacy requirement information of the first user includes 00, the network node 202 determines that the first user wants to protect the breathing data. If the privacy requirement information of the first user includes 01 and 10, the network node 202 determines that the first user wants to protect the heartbeat data and the behavior data.

In another possible design, the privacy requirement information of the first user includes a type identifier of data that the first user wants to detect.

For example, a type identifier of the breathing data is 00, a type identifier of the heartbeat data is 01, a type identifier of the behavior data is 10, and a type identifier of the positioning data is 11. If the privacy requirement information of the first user includes 10, the network node 202 determines that the first user wants to protect data other than the behavior data; or if the privacy requirement information of the first user includes 01 and 11, the network node 202 determines that the first user wants to protect data other than the heartbeat data and the positioning data.

In another possible design, the privacy requirement information of the first user includes a plurality of bits, where each bit corresponds to one data type and indicates whether the first user wants to detect data of the data type. Specifically, if a value of the bit is "0", it indicates that the first user does not want to detect the data of the data type corresponding to the bit; or if a value of the bit is "1", it indicates that the first user wants to detect the data of the data type corresponding to the bit. The reverse is also applicable.

For example, the privacy requirement information of the first user includes four bits, and the four bits respectively correspond to the breathing data, the heartbeat data, the behavior data, and the position data. If a value of the four bits is "0011", the network node 202 determines that the first user does not want to detect the breathing data and the heartbeat data, and wants to detect the behavior data and the position data; or if a value of the four bits is "0001", the network node 202 determines that the first user does not want to detect the breathing data, the heartbeat data, and the behavior data, and wants to detect the position data.

In another possible design, the privacy requirement information of the first user includes information about a second sensing task, for example, an identifier of the second sensing task. The second sensing task is used to sense the first data corresponding to the privacy requirement of the first user.

For example, an identifier of a breathing detection task is hx, an identifier of a heartbeat detection task is xt, an identifier of a behavior detection task is xw, and an identifier of a positioning task is dw. If the privacy requirement information of the first user includes hx, the network node 202 determines that the first user wants to protect the breathing data; or if the privacy requirement information of the first user includes xt and xw, the network node 202 determines that the first user wants to protect the heartbeat data and the behavior data.

In another possible design, the privacy requirement information of the first user includes a plurality of bits, and each bit corresponds to one sensing task and indicates whether the first user wants to execute the sensing task. Specifically, if a value of the bit is "0", it indicates that the first user does not want to execute the sensing task corresponding to the bit; or if a value of the bit is "1", it indicates that the first user wants to execute the sensing task corresponding to the bit. The reverse is also applicable.

For example, the privacy requirement information of the first user includes four bits, and the four bits respectively correspond to a breathing detection task, a heartbeat detection task, a behavior detection task, and a positioning task. If a value of the four bits is "0101", the network node 202 determines that the first user does not want to detect the breathing data and the behavior data, and wants to detect the heartbeat data and the position data; or if a value of the four bits is "1110", the network node 202 determines that the first user does not want to detect the position data, and wants to detect the breathing data, the heartbeat data, and the behavior data.

Optionally, the privacy requirement information of the first user is carried in a first request, and the first request is used to request to execute the first sensing task. For example, the first request is a sensing service request or a sensing operation request. Optionally, the first request further includes information about the first sensing task. In this application, the information about the first sensing task indicates the first sensing task. For example, the information about the first sensing task includes an identifier of the first sensing task.

In Manner 1, the privacy requirement of the first user may be provided to the service node 203 by the first user when the first user registers with the application, or provided to the service node 203 by the first user when the first user triggers the first sensing task, or provided to an operator by the first user when the first user subscribes to the operator, and subsequently provided to the service node 203 by the operator.

Manner 2: The network node 202 obtains the privacy requirement of the first user from a UDM network element.

In a possible implementation, the UDM network element sends privacy requirement information of the first user to the network node 202. After receiving the privacy requirement information of the first user, the network node 202 determines the privacy requirement of the first user based on the privacy requirement information of the first user. For descriptions of the privacy requirement information of the first user and a specific process in which the network node 202 determines the privacy requirement of the first user based on the privacy requirement information of the first user, refer to the corresponding descriptions in Manner 1.

Optionally, when registering with the CN, the first user sends the privacy requirement information of the first user to the CN, and the CN stores the information in the UDM network element. For example, a terminal corresponding to the first user may send registration request information to an AMF network element, where the registration request information includes the privacy requirement information of the first user. After receiving the registration request information, the AMF network element sends the privacy requirement information of the first user to the UDM network element. Alternatively, the privacy requirement information of the first user is provided to the operator by the first user when the first user subscribes to the operator, and the operator stores the information in the UDM network element.

It may be understood that after obtaining the privacy requirement information of the first user, the UDM network element may send the privacy requirement information to the network node 202. Alternatively, the UDM network element sends the privacy requirement information of the first user to the network node 202 based on a request of the network node 202. For example, the service node 203 sends a second request to the network node 202. In this application, the second request is used to request to execute the first sensing task. For example, the second request is a sensing service request, and the second request includes information about the first sensing task and an identifier of the first user. After receiving the second request, the network node 202 sends a third request to the UDM network element. In this application, the third request is used to request the privacy requirement information of the first user. For example, the third request may include the identifier of the first user. After receiving the third request, the UDM network element sends the privacy requirement information of the first user to the network node 202.

It may be understood that the UDM network element may alternatively be replaced with another network element that has a storage function in the CN, for example, an NRF network element or a UDR network element.

Manner 3: The network node 202 locally obtains the privacy requirement of the first user.

It may be understood that, if the network node 202 has obtained the privacy requirement of the first user before S401, for example, has obtained the privacy requirement of the first user in Manner 1 or Manner 2 above, the network node 202 may locally search for the privacy requirement.

S402: The network node 202 sends first information to a sensing apparatus 201 based on the privacy requirement of the first user. Correspondingly, the sensing apparatus 201 receives the first information from the network node 202.

In this application, the sensing apparatus 201 is a sensing apparatus for executing the first sensing task. The first information is used to determine a first algorithm, and the first algorithm is used to filter out the first data corresponding to the privacy requirement of the first user from first sensing data. The first sensing data is data obtained by executing the first sensing task. For example, the first sensing data is data sensed, measured, or detected by executing the first sensing task.

In a possible implementation, the first information is further used to determine at least one of the following: a parameter of the first algorithm or an apparatus for executing the first algorithm.

In this application, the first information may include the following two design manners.

Design 1: The first information includes privacy protection metric information of the first user. The privacy protection metric information of the first user is determined based on the privacy requirement of the first user.

In this application, the privacy protection metric information of the first user indicates a privacy protection metric of the first user. For example, the privacy protection metric information of the first user includes information about a second sensing task and a first metric, and may indicate that accuracy of a sensing result of the second sensing task is less than or equal to the first metric, or indicate that an error of the sensing result of the second sensing task is greater than or equal to the first metric.

In a possible design, the privacy protection metric information of the first user is determined based on the privacy requirement of the first user and a second mapping relationship.

In an example, the second mapping relationship may indicate at least one sensing task and a metric of each sensing task. For any sensing task, a sensing result of the sensing task meets a requirement of a metric of the sensing task. The at least one sensing task includes the second sensing task. For example, the second mapping relationship may be shown in Table 1. If the privacy protection requirement of the first user is breathing data protection, the privacy protection metric information of the first user includes hx and 10%, indicating that accuracy of a sensing result of the breathing detection task is less than or equal to 10%; if the privacy protection requirement of the first user is heartbeat data protection, the privacy protection metric information of the first user includes xt and 8%, indicating that accuracy of a sensing result of the heartbeat detection task is less than or equal to 8%; if the privacy protection requirement of the first user is behavior data protection, the privacy protection metric information of the first user includes xw and 5%, indicating that accuracy of a sensing result of the behavior detection task is less than or equal to 5%; or if the privacy protection requirement of the first user is positioning data protection, the privacy protection metric information of the first user includes dw and 15%, indicating that accuracy of a sensing result of the positioning task is less than or equal to 15%.

**Table 1**

| Identifier of a sensing task | Metric of a sensing task |
|---|---|
| hx | Accuracy of a sensing result is less than or equal to 10% |
| xt | Accuracy of a sensing result is less than or equal to 8% |
| xw | Accuracy of a sensing result is less than or equal to 5% |
| dw | Accuracy of a sensing result is less than or equal to 15% |

In another example, the second mapping relationship may indicate at least one sensing task and metrics of different user levels corresponding to each sensing task. The at least one sensing task includes the second sensing task. The user level may be a level of the user when the user subscribes to the operator. The network node 202 may query the CN for the level of the first user based on the identifier of the first user, and determine the privacy protection metric information of the first user based on the privacy requirement of the first user, the level of the first user, and the second mapping relationship. Alternatively, the user level is a level registered by the user with the service node 203. The network node 202 may obtain the level of the first user from the service node 203, and determine the privacy protection metric information of the first user based on the privacy requirement of the first user, the level of the first user, and the second mapping relationship.

For example, the second mapping relationship may be shown in Table 2. If the privacy protection requirement of the first user is breathing data protection, and the level of the first user is 1, the privacy protection metric information of the first user includes hx and 10%, indicating that accuracy of a sensing result of the breathing detection task is less than or equal to 10%; or if the privacy protection requirement of the first user is heartbeat data protection, and the level of the first user is 2, the privacy protection metric information of the first user includes xt and 10%, indicating that accuracy of a sensing result of the heartbeat detection task is less than or equal to 10%.

**Table 2**

| Identifier of a sensing task | User level | Metric of a sensing task |
|---|---|---|
| hx | 1 | Accuracy of a sensing result is less than or equal to 10% |
| | 2 | Accuracy of a sensing result is less than or equal to 15% |
| xt | 1 | Accuracy of a sensing result is less than or equal to 8% |
| | 2 | Accuracy of a sensing result is less than or equal to 10% |
| xw | 1 | Accuracy of a sensing result is less than or equal to 5% |
| | 2 | Accuracy of a sensing result is less than or equal to 7% |
| dw | 1 | Accuracy of a sensing result is less than or equal to 12% |
| | 2 | Accuracy of a sensing result is less than or equal to 15% |

It should be understood that Table 1 and Table 2 are merely examples of the second mapping relationship. In specific application, the second mapping relationship may alternatively be in another form, or include more rows or columns than those in Table 1 or Table 2, or include fewer rows or columns than those in Table 1 or Table 2. This is not limited.

Design 2: The first information includes information about the first algorithm, and the information about the first algorithm is determined based on the privacy requirement of the first user. The information about the first algorithm indicates the first algorithm. For example, the information about the first algorithm includes an identifier of the first algorithm.

In a possible implementation, the network node 202 determines a privacy protection metric of the first user based on the privacy requirement of the first user, and determines the information about the first algorithm based on the privacy protection metric of the first user.

It may be understood that the network node 202 may determine the privacy protection metric of the first user in the manner described in Design 1 above. Subsequently, the network node 202 may determine the first algorithm based on the privacy protection metric of the first user and a first mapping relationship. In this application, the first mapping relationship indicates at least one privacy protection algorithm and a privacy protection metric corresponding to each privacy protection algorithm. The at least one privacy protection algorithm includes the first algorithm. A privacy protection metric corresponding to the first algorithm meets a privacy protection metric requirement of the first user. In a possible implementation, the privacy protection algorithm may be a neural network, for example, a convolutional neural network, a recurrent neural network, or a self-attention neural network. Structures of neural networks corresponding to different privacy protection algorithms are different; or structures of neural networks corresponding to different privacy protection algorithms are the same, but parameters (for example, weights) in the neural networks are different. Certainly, the privacy protection algorithm may alternatively not be a neural network. This is not limited.

For example, the first mapping relationship may be shown in Table 3. If the privacy protection metric of the first user indicates that accuracy of identifying user behavior is less than or equal to 8%, the network node 202 determines that the first algorithm is a privacy protection algorithm 3; if the privacy protection metric of the first user indicates that accuracy of identifying user behavior is less than or equal to 15%, the network node 202 determines that the first algorithm is a privacy protection algorithm 1 or a privacy protection algorithm 3; or if the privacy protection metric of the first user indicates that an error of detecting user breathing is greater than 90%, the network node 202 determines that the first algorithm is a privacy protection algorithm 2.

**Table 3**

| Privacy protection algorithm | Privacy protection metric |
|---|---|
| Privacy protection algorithm 1 | Accuracy of identifying user behavior is less than or equal to 10% |
| Privacy protection algorithm 2 | Error of detecting user breathing is greater than or equal to 95% |
| Privacy protection algorithm 3 | Accuracy of identifying user behavior is less than or equal to 5% |

It should be understood that Table 3 is merely an example of the first mapping relationship. In specific application, the first mapping relationship may alternatively be in another form, or include more rows or columns than those in Table 3, or include fewer rows than those in Table 3. This is not limited.

Optionally, the first mapping relationship may further indicate a parameter of each privacy protection algorithm, for example, a weight in a neural network corresponding to each privacy protection algorithm. In this way, the information about the first algorithm may further include the parameter of the first algorithm, so that the sensing apparatus 201 determines the parameter of the first algorithm, and processes the first sensing data based on the parameter of the first algorithm by using the first algorithm.

Optionally, in Design 1 or Design 2 above, the first information further includes information about the apparatus for executing the first algorithm (for example, the sensing apparatus 201), to indicate a sensing apparatus for executing the first algorithm. It may be understood that the sensing apparatus may register a capability of the sensing apparatus with the CN, for example, whether the sensing apparatus supports execution of a privacy protection algorithm and/or a computing capability. The network node 202 may determine, based on the capability registered by the sensing apparatus, a sensing apparatus for executing the first algorithm.

It may be understood that the network node 202 may directly send the first information to the sensing apparatus 201, or the network node 202 sends the first information to the sensing apparatus 201 through another network element, for example, the AMF network element or a sensing data processing network element.

S403: The sensing apparatus 201 obtains the first algorithm.

In a possible implementation, the sensing apparatus 201 determines the first algorithm based on the first information. It may be understood that, in Design 1 and Design 2 above, the sensing apparatus 201 determines the first algorithm in different manners. Details are described below.

### In Design 1 above:

In a possible implementation, the sensing apparatus 201 determines the privacy protection metric of the first user based on the first information, and determines the first algorithm based on the privacy protection metric of the first user and a first mapping relationship. For details, refer to the process in which the network node 202 determines the first algorithm in Design 2 above. Details are not described again.

In another possible implementation, the sensing apparatus 201 negotiates the first algorithm with a sensing apparatus 204 based on the first information. The sensing apparatus 204 is a sensing apparatus for executing the first sensing task. Specifically, the sensing apparatus 201 negotiates the first algorithm with the sensing apparatus 204 based on the first information and the first mapping relationship.

For example, the first mapping relationship is stored in the sensing apparatus 204. The sensing apparatus 201 indicates, to the sensing apparatus 204, a privacy protection algorithm supported by the sensing apparatus 201. The sensing apparatus 204 determines, based on the first mapping relationship, whether a privacy protection metric corresponding to the privacy protection algorithm supported by the sensing apparatus 201 can meet a privacy protection metric requirement of the first user. If the privacy protection metric can meet the privacy protection metric requirement, the sensing apparatus 204 indicates the first algorithm to the sensing apparatus 201, so that the sensing apparatus 201 processes the first sensing data by using the first algorithm.

For example, the first mapping relationship is stored in the sensing apparatus 201. The sensing apparatus 204 indicates, to the sensing apparatus 201, a privacy protection algorithm supported by the sensing apparatus 204. The sensing apparatus 201 determines, based on the first mapping relationship, whether a privacy protection metric corresponding to the privacy protection algorithm supported by the sensing apparatus 204 can meet a privacy protection metric requirement of the first user. If the privacy protection metric cannot meet the privacy protection metric requirement, the sensing apparatus 201 determines the first algorithm based on the first information and the first mapping relationship.

It may be understood that, if determining that there is no privacy protection algorithm that meets the privacy protection metric requirement of the first user, the sensing apparatus 204 or the sensing apparatus 201 may perform reporting to the network node 202, so that the network node 202 adjusts the privacy protection metric of the first user, the network node 202 selects a sensing apparatus other than the sensing apparatus 204 or the sensing apparatus 201 to execute the sensing task, or the network node 202 sends feedback information to the service node 203, to indicate that the privacy requirement of the first user cannot be met.

### In Design 2 above:

In a possible implementation, the sensing apparatus 201 determines the first algorithm based on the first information.

Optionally, the network node 202 further sends the first information to a sensing apparatus 204. The sensing apparatus 204 determines the first algorithm based on the first information, and indicates to the sensing apparatus 201 whether the sensing apparatus 204 can execute the first algorithm. When the sensing apparatus 204 cannot execute the first algorithm, the sensing apparatus 201 determines the first algorithm based on the first information. It may be understood that, if the sensing apparatus 201 cannot execute the first algorithm either, the sensing apparatus 201 may perform reporting to the network node 202, so that the network node 202 re-determines a privacy protection algorithm, the CN re-determines a sensing apparatus for executing the first sensing task, or the network node 202 sends feedback information to the service node 203, to indicate that the privacy requirement of the first user cannot be met.

It may be understood that the foregoing is merely an example of obtaining the first algorithm by the sensing apparatus 201. In specific application, the sensing apparatus 201 may alternatively obtain the first algorithm in another manner. For example, the network node 202 may alternatively choose not to send the first information to the sensing apparatus 201, but send the first information to the sensing apparatus 204. After determining the first algorithm based on the first information, the sensing apparatus 204 indicates the first algorithm to the sensing apparatus 201. Alternatively, after receiving the first information, the sensing apparatus 204 negotiates the first algorithm with the sensing apparatus 201.

S404: The sensing apparatus 201 obtains the first sensing data.

In a possible implementation, the sensing apparatus 201 executes the first sensing task to obtain the first sensing data.

For example, the sensing apparatus 201 is the sensing apparatus in FIG. 1A. The sensing apparatus 201 senses the target in the single-station sensing mode, to obtain the first sensing data.

For example, the sensing apparatus 201 is the sensing apparatus 2 in FIG. 1B. The sensing apparatus 201 receives the echo signal of the sensing signal, and obtains the first sensing data based on the echo signal of the sensing signal.

In another possible implementation, the sensing apparatus 204 executes the first sensing task to obtain the first sensing data, and sends the first sensing data to the sensing apparatus 201. The sensing apparatus 201 receives the first sensing data, that is, obtains the first sensing data.

For example, the sensing apparatus 201 is the sensing apparatus 1 in FIG. 1B, and the sensing apparatus 204 is the sensing apparatus 2 in FIG. 1B. The sensing apparatus 201 sends the sensing signal. The sensing signal reaches the target to form the echo signal of the sensing signal, and the echo signal is received by the sensing apparatus 204. Subsequently, the sensing apparatus 204 obtains the first sensing data based on the echo signal of the sensing signal, and sends the first sensing data to the sensing apparatus 201.

S405: The sensing apparatus 201 processes the first sensing data by using the first algorithm, to obtain second sensing data.

In this application, the second sensing data may be used to determine a sensing result of the first sensing task.

In a possible implementation, the first sensing data is obtained by the sensing apparatus 201 or the sensing apparatus 204 through channel measurement, and includes data related to an environment in which a target is located. When processing the first sensing data by using the first algorithm, the sensing apparatus 201 may filter out the first data that the user wants to protect from the data related to the environment, to protect user privacy data.

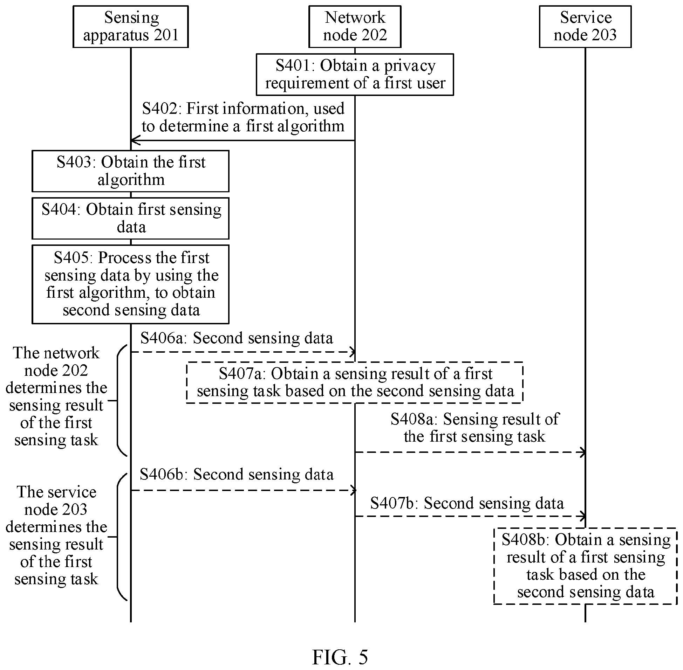

Optionally, in a possible implementation of the method shown in FIG. 4, the sensing apparatus 201 may send the second sensing data to the CN, so that the CN obtains the sensing result of the first sensing task based on the second sensing data. The following embodiments of this application are described by using an example in which the sensing apparatus 201 sends the second sensing data to the network node 202. In specific application, the sensing apparatus 201 may alternatively send the second sensing data to a network element in the CN other than the network node 202, for example, a network node 205. Therefore, the network node 202 in the following embodiments of this application may be replaced with the network node 205. This applies throughout, and will not be repeated below. For example, as shown in FIG. 5, the method shown in FIG. 4 further includes the following steps.

S406a: The sensing apparatus 201 sends the second sensing data to the network node 202. Correspondingly, the network node 202 receives the second sensing data from the sensing apparatus 201.

S407a: The network node 202 obtains the sensing result of the first sensing task based on the second sensing data.

In a possible implementation, the network node 202 processes the second sensing data by using a second algorithm, to obtain the sensing result of the first sensing task.

It may be understood that before S407a, the network node 202 may obtain the second algorithm.

In a possible implementation, the network node 202 may determine a metric of the first sensing task, and determine the second algorithm based on the metric of the first sensing task. In this application, the metric of the first sensing task indicates accuracy or an error of the sensing result of the first sensing task. Optionally, the metric of the first sensing task further indicates a false alarm rate of the sensing result of the first sensing task. For example, the first sensing task is a positioning task. The metric of the first sensing task indicates that accuracy of the positioning result is greater than or equal to 90%, or indicates that an error of the positioning result is less than or equal to 5%. The metric of the first sensing task may further indicate that a false alarm rate of the positioning result is less than or equal to 10%.

In an example, the network node 202 may determine the metric of the first sensing task based on the first sensing task and a third mapping relationship. In this application, the third mapping relationship may indicate at least one sensing task and a metric of each sensing task, or the third mapping relationship may indicate at least one sensing task and metrics of different user levels corresponding to each sensing task. For example, third first mapping relationship may be shown in Table 4. If the first sensing task is for identifying a room in which a user is located (the identifier of the first sensing task is 0), the metric of the first sensing task is that accuracy of identifying the room in which the user is located is greater than or equal to 90%; or if the first sensing task is for identifying user behavior (the identifier of the first sensing task is 1), the metric of the first sensing task is that accuracy of identifying the user behavior is greater than or equal to 95%.

**Table 4**

| Identifier of a sensing task | Metric of a sensing task |
|---|---|
| 0 | Accuracy of identifying a room in which a user is located is greater than or equal to 90% |
| 1 | Accuracy of identifying user behavior is less than or equal to 95% |

It should be understood that Table 4 is merely an example of the third mapping relationship. In specific application, the third mapping relationship may alternatively be in another form, or include more rows or columns than those in Table 4, or include fewer rows than those in Table 4. This is not limited.

It may be understood that, after determining the metric of the first sensing task, the network node 202 may determine the second algorithm based on the metric of the first sensing task.

In an example, the network node 202 determines the second algorithm based on the metric of the first sensing task and a fourth mapping relationship. In this application, the fourth mapping relationship indicates at least one sensing algorithm and a metric corresponding to each sensing algorithm. The at least one sensing algorithm includes the second algorithm. A metric corresponding to the second algorithm meets a requirement of the metric of the first sensing task. In a possible implementation, the sensing algorithm may be a neural network, for example, a convolutional neural network, a recurrent neural network, or a self-attention neural network. Structures of neural networks corresponding to different sensing algorithms are different; or structures of neural networks corresponding to different sensing algorithms are the same, but parameters (for example, weights) in the neural networks are different. Certainly, the sensing algorithm may alternatively not be a neural network. This is not limited.

In this application, both the privacy protection algorithm and the sensing algorithm may be implemented through a neural network. There may be two training manners for a privacy protection network (namely, a neural network for implementing privacy protection) and a sensing network (namely, a neural network for determining a sensing result of a sensing task). One manner is joint training of the privacy protection network and the sensing network, and the other manner is training of the privacy protection network first, and then training of the sensing network based on the privacy protection network. The training manner may be adversarial network training, or may be another training manner. This is not limited in this application.

For example, a scenario in which the core network provides a sensing service is used as an example. A core network element (for example, the network node 202 and/or the network node 205) jointly trains the privacy protection network and the sensing network. Alternatively, the sensing apparatus 201 and/or the sensing apparatus 204 train/trains the privacy protection network, and indicate/indicates a related parameter of a trained network to a core network element (for example, the network node 202 and/or the network node 205). The core network element adapts to the trained network to train the sensing network.

For example, a scenario in which the service node 203 provides a sensing service is used as an example. The sensing apparatus 201 and/or the sensing apparatus 204 train/trains the privacy protection network, and indicate/indicates a related parameter of a trained network to the service node 203. The service node 203 adapts to the trained network to train the sensing network.

For example, the fourth mapping relationship may be shown in Table 5. If the metric of the first sensing task indicates that accuracy of identifying user behavior is greater than or equal to 80%, the network node 202 determines that the second algorithm is a sensing algorithm 3; if the metric of the first sensing task indicates that accuracy of identifying a room in which a user is located is greater than or equal to 90%, the network node 202 determines that the second algorithm is a sensing algorithm 1; or if the metric of the first sensing task indicates that an error of identifying a room in which a user is located is less than 12%, the network node 202 determines that the second algorithm is a sensing algorithm 2.

**Table 5**

| Sensing algorithm | Metric of a sensing algorithm |
|---|---|
| Sensing algorithm 1 | Accuracy of identifying a room in which a user is located is greater than or equal to 95% |
| Sensing algorithm 2 | Error of identifying a room in which a user is located is less than or equal to 10% |
| Sensing algorithm 3 | Accuracy of identifying user behavior is greater than or equal to 85% |

It should be understood that Table 5 is merely an example of the fourth mapping relationship. In specific application, the fourth mapping relationship may alternatively be in another form, or include more rows or columns than those in Table 5, or include fewer rows than those in Table 5. This is not limited.

In another example, the network node 202 determines the second algorithm based on the metric of the first sensing task and the first algorithm. For example, the network node 202 determines the second algorithm based on the metric of the first sensing task, the first algorithm, and a fifth mapping relationship. In this application, the fifth mapping relationship indicates at least one sensing algorithm, a metric corresponding to each sensing algorithm, and a privacy protection algorithm corresponding to each sensing algorithm. The at least one sensing algorithm includes the second algorithm. The privacy protection algorithm in the fifth mapping relationship includes the first algorithm.

For example, the fifth mapping relationship may be shown in Table 6. If the metric of the first sensing task indicates that accuracy of identifying user behavior is greater than or equal to 80%, and the first algorithm is a privacy protection algorithm 2, the network node 202 determines that the second algorithm is a sensing algorithm 3; or if the metric of the first sensing task indicates that accuracy of identifying a room in which a user is located is greater than or equal to 90%, and the first algorithm is a privacy protection algorithm 1, the network node 202 determines that the second algorithm is a sensing algorithm 1.

**Table 6**

| Sensing algorithm | Metric of a sensing algorithm | Privacy protection algorithm |
|---|---|---|
| Sensing algorithm 1 | Accuracy of identifying a room in which a user is located is greater than or equal to 95% | Privacy protection algorithm 1 |
| Sensing algorithm 2 | Error of identifying a room in which a user is located is less than or equal to 10% | Privacy protection algorithm 1 |
| Sensing algorithm 3 | Accuracy of identifying user behavior is greater than or equal to 95% | Privacy protection algorithm 2 |
| Sensing algorithm 4 | Accuracy of identifying a room in which a user is located is greater than or equal to 95% | Privacy protection algorithm 3 |
| Sensing algorithm 5 | Error of identifying user behavior is less than or equal to 15% | Privacy protection algorithm 4 |

Optionally, the fifth mapping relationship further indicates a privacy protection metric corresponding to each privacy protection algorithm. The network node 202 may determine the second algorithm based on the metric of the first sensing task, the first algorithm, the privacy protection metric of the first user, and the fifth mapping relationship.

For example, the fifth mapping relationship may be shown in Table 7. If the metric of the first sensing task indicates that accuracy of identifying a room in which a user is located is greater than or equal to 90%, the first algorithm is a privacy protection algorithm 1, and the privacy protection metric of the first user indicates that accuracy of identifying user behavior is less than or equal to 15%, the network node 202 determines that the second algorithm is a sensing algorithm 1; or if the metric of the first sensing task indicates that an error of identifying user behavior is less than or equal to 15%, the first algorithm is a privacy protection algorithm 4, and the privacy protection metric of the first user indicates that an error of detecting a user heartbeat is greater than or equal to 80%, the network node 202 determines that the second algorithm is a sensing algorithm 5.

**Table 7**

| Sensing algorithm | Metric of a sensing algorithm | Privacy protection algorithm | Privacy protection metric |
|---|---|---|---|
| Sensing algorithm 1 | Accuracy of identifying a room in which a user is located is greater than or equal to 95% | Privacy protection algorithm 1 | Accuracy of identifying user behavior is less than or equal to 15% |
| Sensing algorithm 2 | Accuracy of identifying a room in which a user is located is greater than or equal to 85% | Privacy protection algorithm 1 | Accuracy of identifying user behavior is less than or equal to 15% |
| Sensing algorithm 3 | Accuracy of identifying user behavior is greater than or equal to 95% | Privacy protection algorithm 2 | Accuracy of identifying a user heartbeat is less than or equal to 15% |
| Sensing algorithm 4 | Accuracy of identifying user behavior is greater than or equal to 95% | Privacy protection algorithm 3 | Error of detecting a user heartbeat is greater than or equal to 85% |
| Sensing algorithm 5 | Error of identifying user behavior is less than or equal to 15% | Privacy protection algorithm 4 | Error of detecting a user heartbeat is greater than or equal to 80% |

It should be understood that Table 6 and Table 7 are merely examples of the fifth mapping relationship. In specific application, the fifth mapping relationship may alternatively be in another form, or include more rows or columns than those in Table 6 or Table 7, or include fewer rows or columns than those in Table 6 or Table 7. This is not limited.

The foregoing examples are examples of determining the second algorithm by the network node 202. In specific application, the network node 202 may alternatively obtain the second algorithm from another node (for example, the network node 205). For example, the network node 205 may determine the second algorithm in the foregoing manner in which the network node 202 determines the second algorithm, and send second information to the network node 202. The second information includes information about the second algorithm, for example, an identifier of the second algorithm. After receiving the second information, the network node 202 may determine the second algorithm based on the second information.

In addition to the foregoing method, the network node 202 may alternatively obtain the metric of the first sensing task from another node. For example, the network node 205 obtains the metric of the first sensing task, and sends second information to the network node 202. The second information includes metric information of the first sensing task. After receiving the second information, the network node 202 may determine the second algorithm based on the metric of the first sensing task.

S408a: The network node 202 sends the sensing result of the first sensing task to the service node 203. Correspondingly, the service node 203 receives the sensing result of the first sensing task from the network node 202.

In S406a to S408a, the sensing result of the first sensing task is determined by the network node 202 in the CN. In other words, the CN may provide a sensing service for the service node 203. Therefore, the service node 203 does not need to have large computational power, and an operation of the service node 203 can be simplified.

Optionally, in a possible implementation of the method shown in FIG. 4, the sensing apparatus 201 may send the second sensing data to the network node 202, so that the network node 202 sends the second sensing data to the service node 203, and the service node 203 may obtain the sensing result of the first sensing task based on the second sensing data. For details, refer to FIG. 5. The method shown in FIG. 4 further includes the following steps.

S406b: The sensing apparatus 201 sends the second sensing data to the network node 202. Correspondingly, the network node 202 receives the second sensing data from the sensing apparatus 201.

S407b: The network node 202 sends the second sensing data to the service node 203. Correspondingly, the service node 203 receives the second sensing data from the network node 202.

S408b: The service node 203 obtains the sensing result of the first sensing task based on the second sensing data.

In a possible implementation, the service node 203 processes the second sensing data by using the second algorithm, to obtain the sensing result of the first sensing task.

It may be understood that, before S408b, the service node 203 may determine the metric of the first sensing task, and determine the second algorithm based on the metric of the first sensing task. For example, the service node 203 may determine the metric of the first sensing task based on the first sensing task and the third mapping relationship.

It may be understood that, after determining the metric of the first sensing task, the service node 203 may determine the second algorithm based on the metric of the first sensing task and the first algorithm.

It may be understood that a process in which the service node 203 obtains the sensing result of the first sensing task based on the second sensing data is similar to the process in which the network node 202 obtains the sensing result of the first sensing task based on the second sensing data. For details, refer to the corresponding descriptions in S407a. Details are not described again.

In S406b to S408b, the sensing result of the first sensing task is determined by the service node 203. Therefore, the service node 203 may further select a suitable sensing algorithm (for example, the foregoing second algorithm) with reference to a service requirement. For example, if a service has a high requirement for accuracy of the first sensing task, the service node 203 may select a sensing algorithm with high accuracy; or if a service has a high requirement on a delay, the service node 203 may select a sensing algorithm with low accuracy. This provides high flexibility.

It may be understood that the actions of the sensing apparatus 201, the sensing apparatus 204, the network node 202, the service node 203, or the network node 205 in the foregoing steps may be performed by the processor 301 in the communication apparatus 30 shown in FIG. 3 by invoking the application program code stored in the memory 303. This is not limited in this application.

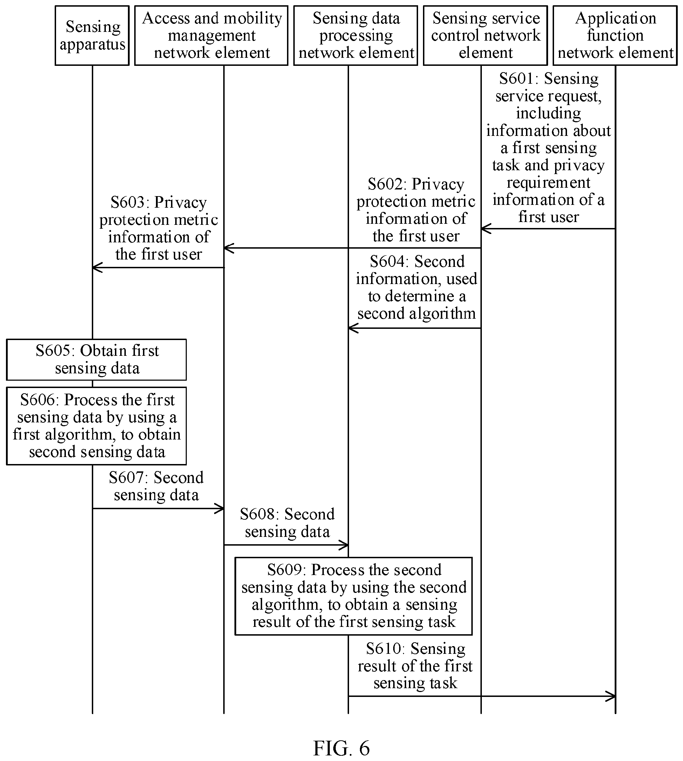

For better understanding of the privacy protection method provided in this application, the following separately uses the communication networks shown in FIG. 2D and FIG. 2E as examples to describe a complete procedure of the privacy protection method provided in this application. It may be understood that the sensing apparatus 201 in the method shown in FIG. 4 or FIG. 5 corresponds to a sensing apparatus in methods shown in FIG. 6 to FIG. 9, the network node 202 in the method shown in FIG. 4 or FIG. 5 corresponds to a sensing service control network element and/or a sensing data processing network element in the methods shown in FIG. 6 to FIG. 9, and the service node 203 in the method shown in FIG. 4 or FIG. 5 corresponds to an application function network element in the methods shown in FIG. 6 to FIG. 9.

First, the communication network shown in FIG. 2D is used as an example for description.

FIG. 6 shows another privacy protection method according to this application. The method may include the following steps.

S601: The application function network element sends a sensing service request to the sensing service control network element. Correspondingly, the sensing service control network element receives the sensing service request from the application function network element.

In this application, the sensing service request is used to request to execute a first sensing task. For example, the sensing service request includes information about the first sensing task and privacy requirement information of a first user.

In a possible implementation, the application function network element sends the sensing service request to the sensing service control network element through an NEF network element. Correspondingly, the sensing service control network element receives the sensing service request from the application function network element through the NEF network element. In other words, the NEF network element can forward the sensing service request.

For detailed descriptions of S601, refer to the corresponding descriptions in Manner 1 above. Details are not described herein again.

S602: The sensing service control network element sends privacy protection metric information of the first user to an access and mobility management network element (for example, an AMF network element) based on the sensing service request. Correspondingly, the access and mobility management network element receives the privacy protection metric information of the first user from the sensing service control network element.

S603: The access and mobility management network element sends the privacy protection metric information of the first user to the sensing apparatus. Correspondingly, the sensing apparatus receives the privacy protection metric information of the first user from the access and mobility management network element.

In a possible implementation, the access and mobility management network element orchestrates and schedules the first sensing task, determines the sensing apparatus, and sends the privacy protection metric information of the first user to the sensing apparatus.

Optionally, the access and mobility management network element further indicates a type of a sensing signal, for example, a reference signal, to the sensing apparatus.

It may be understood that a specific process of S602 and S603 is similar to that of S402. For details, refer to the corresponding descriptions in S402.

S604: The sensing service control network element sends second information to the sensing data processing network element. Correspondingly, the sensing data processing network element receives the second information from the sensing service control network element.

In this application, the second information may be used to determine a second algorithm.

In a possible design, the second information includes metric information of the first sensing task. The metric information of the first sensing task indicates a metric of the first sensing task. For example, the metric information of the first sensing task includes an identifier of the first sensing task and a second metric, and may indicate that accuracy of a sensing result of the first sensing task is less than or equal to the second metric, or indicate that an error of a sensing result of the first sensing task is greater than or equal to the second metric.

For example, the sensing service control network element may determine the metric of the first sensing task, and send the second information to the sensing data processing network element, so that the sensing data processing network element determines the second algorithm based on the metric of the first sensing task. A process in which the sensing service control network element determines the metric of the first sensing task is similar to the process in which the network node 202 determines the metric of the first sensing task in S407a, and a process in which the sensing data processing network element determines the second algorithm based on the metric of the first sensing task is similar to the process in which the network node 202 determines the second algorithm based on the metric of the first sensing task in S407a. For details, refer to the corresponding descriptions in S407a.

In another possible design, the second information includes information about the second algorithm. The information about the second algorithm indicates the second algorithm. For example, the information about the second algorithm includes an identifier of the second algorithm.

For example, the sensing service control network element may determine the metric of the first sensing task, determine the second algorithm based on the metric of the first sensing task, and send the second information to the sensing data processing network element, so that the sensing data processing network element determines the second algorithm based on the second information. A process in which the sensing service control network element determines the metric of the first sensing task and determines the second algorithm based on the metric of the first sensing task is similar to the process in which the network node 202 determines the metric of the first sensing task and determines the second algorithm based on the metric of the first sensing task in S407a. For details, refer to the corresponding descriptions in S407a.

It may be understood that an execution sequence of S602 and S603, and S604 is not limited in this application. For example, S602 and S603 may be performed before S604, or S604 is performed before S602 and S603, or S602 and S603, and S604 are simultaneously performed.

S605: The sensing apparatus obtains first sensing data.

It may be understood that a process of S605 is similar to that of S404. For details, refer to the descriptions of S404.

S606: The sensing apparatus processes the first sensing data by using a first algorithm, to obtain second sensing data.

In a possible implementation, the sensing apparatus determines the first algorithm based on first information, and processes the first sensing data by using the first algorithm, to obtain the second sensing data. For a process in which the sensing apparatus determines the first algorithm based on the first information, refer to the corresponding descriptions in S403.

S607: The sensing apparatus sends the second sensing data to the access and mobility management network element. Correspondingly, the access and mobility management network element receives the second sensing data from the sensing apparatus.

S608: The access and mobility management network element sends the second sensing data to the sensing data processing network element. Correspondingly, the sensing data processing network element receives the second sensing data from the access and mobility management network element.

S609: The sensing data processing network element processes the second sensing data by using the second algorithm, to obtain the sensing result of the first sensing task.

S610: The sensing data processing network element sends the sensing result of the first sensing task to the application function network element. Correspondingly, the application function network element receives the sensing result of the first sensing task from the sensing data processing network element.

In a possible implementation, the sensing data processing network element sends the sensing result of the first sensing task to the application function network element through the NEF network element. Correspondingly, the application function network element receives the sensing result of the first sensing task from the sensing data processing network element through the NEF network element. In other words, the NEF network element can forward the sensing result.

Based on the method shown in FIG. 6, the sensing apparatus may determine the first algorithm based on an indication of the sensing service control network element, and filter out, from the first sensing data based on the first algorithm, data that the first user wants to protect or data that the first user does not want to disclose, so that the second sensing data sent to the sensing data processing network element does not include the data, thereby reducing a risk of leakage of user privacy data.

In the method shown in FIG. 6, the sensing result of the first sensing task is determined by the sensing data processing network element. In addition, in specific application, the sensing result of the first sensing task may alternatively be determined by the application function network element. For example, S604 to S610 may be replaced with the following operations: The sensing apparatus obtains first sensing data, processes the first sensing data by using a first algorithm to obtain second sensing data, and sends the second sensing data to the access and mobility management network element. After receiving the second sensing data, the access and mobility management network element sends the second sensing data to the application function network element through the NEF network element. It may be understood that, before receiving the second sensing data, the application function network element may determine a metric of the first sensing task, and determine a second algorithm based on the metric of the first sensing task. In this way, after receiving the second sensing data, the application function network element may process the second sensing data by using the second algorithm, to obtain a sensing result of the first sensing task.

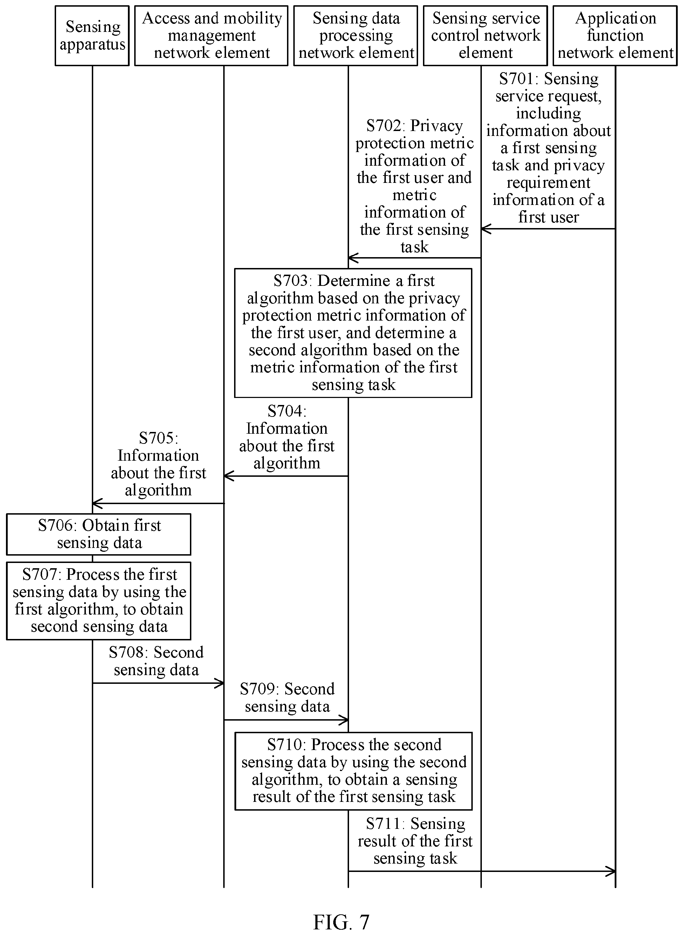

It may be understood that, in the method shown in FIG. 6, the first algorithm is determined by the sensing apparatus based on a privacy protection metric of the first user that is indicated by a CN. In specific application, the first algorithm may alternatively be determined by the CN and indicated to the sensing apparatus. For details, refer to the method shown in FIG. 7.

FIG. 7 shows another privacy protection method according to this application. The method may include the following steps.

S701: The application function network element sends a sensing service request to the sensing service control network element. Correspondingly, the sensing service control network element receives the sensing service request from the application function network element.

It may be understood that a process of S701 is similar to that of S601. For details, refer to the descriptions in S601.

S702: The sensing service control network element sends privacy protection metric information of a first user and metric information of a first sensing task to the sensing data processing network element based on the sensing service request. Correspondingly, the sensing data processing network element receives the privacy protection metric information of the first user and the metric information of the first sensing task from the sensing service control network element.

In a possible implementation, the sensing service control network element determines a privacy protection metric of the first user and a metric of the first sensing task, and sends the privacy protection metric information of the first user and the metric information of the first sensing task to the sensing data processing network element. For a process in which the sensing service control network element determines the privacy protection metric of the first user and the metric of the first sensing task, refer to the corresponding descriptions in the method shown in FIG. 4 or FIG. 5.

S703: The sensing data processing network element determines a first algorithm based on the privacy protection metric information of the first user, and determines a second algorithm based on the metric information of the first sensing task.

It may be understood that a process in which the sensing data processing network element determines the first algorithm and the second algorithm is similar to the process in which the network node 202 determines the first algorithm and the second algorithm. For details, refer to the corresponding descriptions in the method shown in FIG. 4 or FIG. 5.

S704: The sensing data processing network element sends information about the first algorithm to an access and mobility management network element (for example, an AMF network element). Correspondingly, the access and mobility management network element receives the information about the first algorithm from the sensing data processing network element.

S705: The access and mobility management network element sends the information about the first algorithm to the sensing apparatus. Correspondingly, the sensing apparatus receives the information about the first algorithm from the access and mobility management network element.

S706: The sensing apparatus obtains first sensing data.

It may be understood that a process of S706 is similar to that of S404. For details, refer to the descriptions of S404.

S707: The sensing apparatus processes the first sensing data by using the first algorithm, to obtain second sensing data.

S708: The sensing apparatus sends the second sensing data to the access and mobility management network element. Correspondingly, the access and mobility management network element receives the second sensing data from the sensing apparatus.

S709: The access and mobility management network element sends the second sensing data to the sensing data processing network element. Correspondingly, the sensing data processing network element receives the second sensing data from the access and mobility management network element.

S710: The sensing data processing network element processes the second sensing data by using the second algorithm, to obtain a sensing result of the first sensing task.

S711: The sensing data processing network element sends the sensing result of the first sensing task to the application function network element. Correspondingly, the application function network element receives the sensing result of the first sensing task from the sensing data processing network element.

In a possible implementation, the sensing data processing network element sends the sensing result of the first sensing task to the application function network element through an NEF network element. Correspondingly, the application function network element receives the sensing result of the first sensing task from the sensing data processing network element through the NEF network element. In other words, the NEF network element can forward the sensing result.

Based on the method shown in FIG. 7, the sensing data processing network element may determine the first algorithm and indicate the first algorithm to the sensing apparatus, so that the sensing apparatus filters out, from the first sensing data based on the first algorithm, data that the first user wants to protect or data that the first user does not want to disclose, to obtain the second sensing data that does not include the data, thereby reducing a risk of leakage of user privacy data.

In the method shown in FIG. 7, the sensing result of the first sensing task is determined by the sensing data processing network element. In addition, in specific application, the sensing result of the first sensing task may alternatively be determined by the application function network element. For example, S702 to S711 may be replaced with the following operations: The sensing service control network element sends privacy protection metric information of a first user to the sensing data processing network element based on the sensing service request. After receiving the privacy protection indication information of the first user, the sensing data processing network element may determine a first algorithm based on the privacy protection metric information of the first user, and send information about the first algorithm to the sensing apparatus through an access and mobility management network element. The sensing apparatus may receive the information about the first algorithm, obtain first sensing data, and process the first sensing data by using the first algorithm, to obtain second sensing data. Subsequently, the sensing apparatus may send the second sensing data to the access and mobility management network element. After receiving the second sensing data, the access and mobility management network element sends the second sensing data to the application function network element through an NEF network element. It may be understood that, before receiving the second sensing data, the application function network element may determine a metric of a first sensing task, and determine a second algorithm based on the metric of the first sensing task. In this way, after receiving the second sensing data, the application function network element may process the second sensing data by using the second algorithm, to obtain a sensing result of the first sensing task.

The following uses the communication network shown in FIG. 2E as an example to describe the method provided in this application. A difference between the communication network shown in FIG. 2E and the communication network shown in FIG. 2D lies in that in FIG. 2E, the sensing data processing network element can directly communicate with the sensing apparatus, without the need for the access and mobility management network element to forward information between the sensing data processing network element and the sensing apparatus.

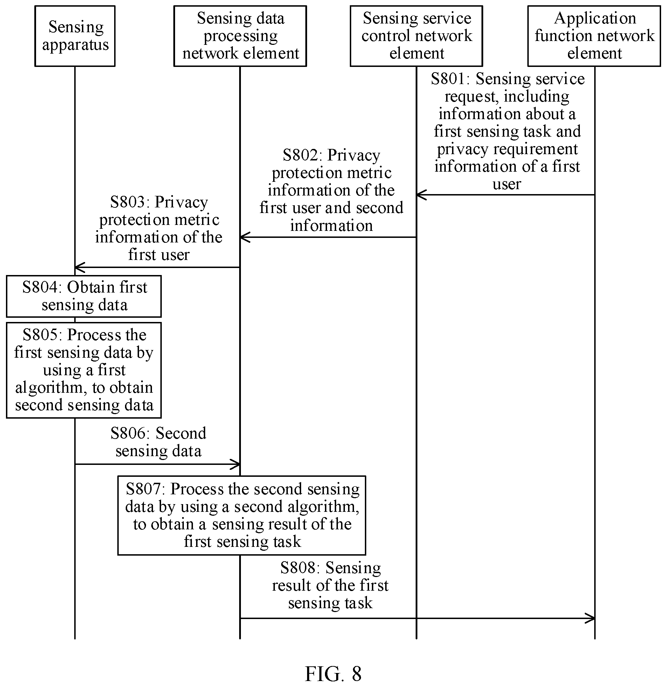

FIG. 8 shows another privacy protection method according to this application. The method may include the following steps.

S801: The application function network element sends a sensing service request to the sensing service control network element. Correspondingly, the sensing service control network element receives the sensing service request from the application function network element.

It may be understood that a process of S801 is similar to that of S601. For details, refer to the descriptions in S601.

S802: The sensing service control network element sends privacy protection metric information of a first user and second information to the sensing data processing network element based on the sensing service request. Correspondingly, the sensing data processing network element receives the privacy protection metric information of the first user and the second information from the sensing service control network element.

The second information may be used to determine a second algorithm, so that the sensing data processing network element determines the second algorithm based on the second information. For related descriptions of the second information, refer to the corresponding descriptions in S604. A specific process in which the sensing service control network element sends the privacy protection metric information of the first user based on the sensing service request is similar to that in S402. For details, refer to the corresponding descriptions in S402.

S803: The sensing data processing network element sends the privacy protection metric information of the first user to the sensing apparatus. Correspondingly, the sensing apparatus receives the privacy protection metric information of the first user from the sensing data processing network element.

In a possible implementation, the sensing data processing network element orchestrates and schedules a first sensing task, determines the sensing apparatus, and sends the privacy protection metric information of the first user to the sensing apparatus.

Optionally, the sensing data processing network element further indicates a type of a sensing signal, for example, a reference signal, to the sensing apparatus.

S804: The sensing apparatus obtains first sensing data.

S805: The sensing apparatus processes the first sensing data by using a first algorithm, to obtain second sensing data.

It may be understood that a specific process of S804 and S805 is similar to the process of S605 and S606. For details, refer to the descriptions of S605 and S606.

S806: The sensing apparatus sends the second sensing data to the sensing data processing network element. Correspondingly, the sensing data processing network element receives the second sensing data from the sensing apparatus.

S807: The sensing data processing network element processes the second sensing data by using the second algorithm, to obtain a sensing result of the first sensing task.

S808: The sensing data processing network element sends the sensing result of the first sensing task to the application function network element. Correspondingly, the application function network element receives the sensing result of the first sensing task from the sensing data processing network element.

In a possible implementation, the sensing data processing network element sends the sensing result of the first sensing task to the application function network element through an NEF network element. Correspondingly, the application function network element receives the sensing result of the first sensing task from the sensing data processing network element through the NEF network element. In other words, the NEF network element can forward the sensing result.

Based on the method shown in FIG. 8, the sensing apparatus may determine the first algorithm based on an indication of the sensing data processing network element, and filter out, from the first sensing data based on the first algorithm, data that the first user wants to protect or data that the first user does not want to disclose, so that the second sensing data sent to the sensing data processing network element does not include the data, thereby reducing a risk of leakage of user privacy data.

In the method shown in FIG. 8, the sensing result of the first sensing task is determined by the sensing data processing network element. In addition, in specific application, the sensing result of the first sensing task may alternatively be determined by the application function network element. For example, S802 to S808 may be replaced with the following operations: The sensing service control network element sends privacy protection metric information of a first user to the sensing data processing network element based on the sensing service request. After receiving the privacy protection metric information of the first user, the sensing data processing network element sends the privacy protection metric information of the first user to the sensing apparatus. The sensing apparatus receives the privacy protection metric information of the first user, obtains first sensing data, and processes the first sensing data by using a first algorithm, to obtain second sensing data. Subsequently, the sensing apparatus sends the second sensing data to the sensing data processing network element. After receiving the second sensing data, the sensing data processing network element sends the second sensing data to the application function network element through an NEF network element. It may be understood that, before receiving the second sensing data, the application function network element may determine a metric of a first sensing task, and determine a second algorithm based on the metric of the first sensing task. In this way, after receiving the second sensing data, the application function network element may process the second sensing data by using the second algorithm, to obtain a sensing result of the first sensing task.

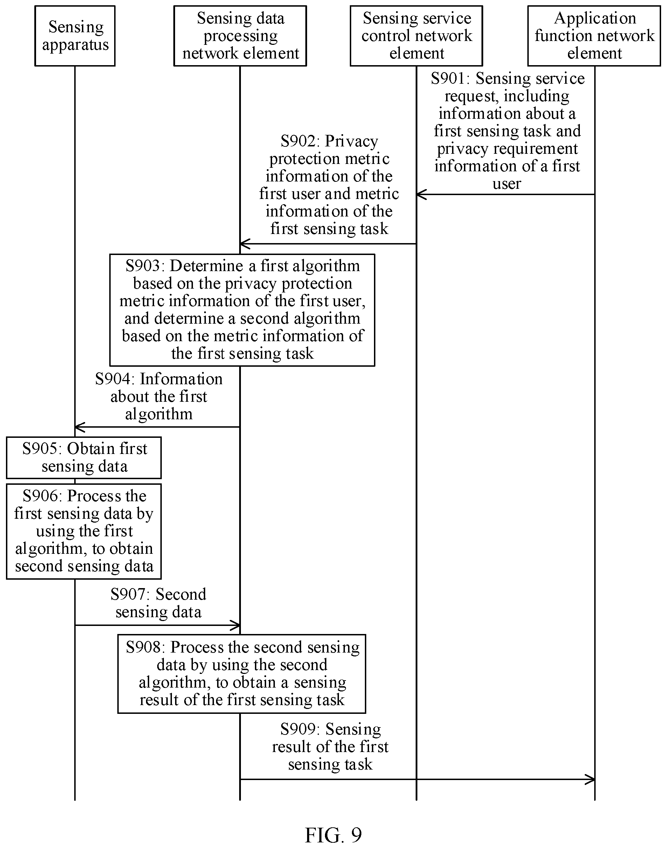

It may be understood that, in the method shown in FIG. 8, the first algorithm is determined by the sensing apparatus based on a privacy protection metric of the first user that is indicated by a CN. In specific application, the first algorithm may alternatively be determined by the CN and indicated to the sensing apparatus. For details, refer to the method shown in FIG. 9.

FIG. 9 shows another privacy protection method according to this application. The method may include the following steps.

S901: The application function network element sends a sensing service request to the sensing service control network element. Correspondingly, the sensing service control network element receives the sensing service request from the application function network element.

S902: The sensing service control network element sends privacy protection metric information of a first user and metric information of a first sensing task to the sensing data processing network element based on the sensing service request. Correspondingly, the sensing data processing network element receives the privacy protection metric information of the first user and the metric information of the first sensing task from the sensing service control network element.

S903: The sensing data processing network element determines a first algorithm based on the privacy protection metric information of the first user, and determines a second algorithm based on the metric information of the first sensing task.

It may be understood that a process of S901 to S903 is similar to that of S701 to S703. For details, refer to the corresponding descriptions in S701 to S703.

S904: The sensing data processing network element sends information about the first algorithm to the sensing apparatus. Correspondingly, the sensing apparatus receives the information about the first algorithm from the sensing data processing network element.

S905: The sensing apparatus obtains first sensing data.

It may be understood that a process of S905 is similar to that of S404. For details, refer to the descriptions of S404.

S906: The sensing apparatus processes the first sensing data by using the first algorithm, to obtain second sensing data.

S907: The sensing apparatus sends the second sensing data to the sensing data processing network element. Correspondingly, the sensing data processing network element receives the second sensing data from the sensing apparatus.

S908: The sensing data processing network element processes the second sensing data by using the second algorithm, to obtain a sensing result of the first sensing task.

S909: The sensing data processing network element sends the sensing result of the first sensing task to the application function network element. Correspondingly, the application function network element receives the sensing result of the first sensing task from the sensing data processing network element.

In a possible implementation, the sensing data processing network element sends the sensing result of the first sensing task to the application function network element through an NEF network element. Correspondingly, the application function network element receives the sensing result of the first sensing task from the sensing data processing network element through the NEF network element. In other words, the NEF network element can forward the sensing result.

Based on the method shown in FIG. 9, the sensing data processing network element may determine the first algorithm and indicate the first algorithm to the sensing apparatus, so that the sensing apparatus filters out, from the first sensing data based on the first algorithm, data that the first user wants to protect or data that the first user does not want to disclose, to obtain the second sensing data that does not include the data, thereby reducing a risk of leakage of user privacy data.

In the method shown in FIG. 9, the sensing result of the first sensing task is determined by the sensing data processing network element. In addition, in specific application, the sensing result of the first sensing task may alternatively be determined by the application function network element. For example, S902 to S909 may be replaced with the following operations: The sensing service control network element sends privacy protection metric information of a first user to the sensing data processing network element based on the sensing service request. After receiving the privacy protection indication information of the first user, the sensing data processing network element may determine a first algorithm based on the privacy protection metric information of the first user, and send information about the first algorithm to the sensing apparatus. The sensing apparatus may receive the information about the first algorithm, obtain first sensing data, and process the first sensing data by using the first algorithm, to obtain second sensing data. Subsequently, the sensing apparatus may send the second sensing data to the sensing data processing network element. After receiving the second sensing data, the sensing data processing network element sends the second sensing data to the application function network element through an NEF network element. It may be understood that, before receiving the second sensing data, the application function network element may determine a metric of a first sensing task, and determine a second algorithm based on the metric of the first sensing task. In this way, after receiving the second sensing data, the application function network element may process the second sensing data by using the second algorithm, to obtain a sensing result of the first sensing task.

It may be understood that the actions of the sensing apparatus, the access and mobility management network element, the sensing data processing network element, the sensing service control network element, or the application function network element in the methods shown in FIG. 6 to FIG. 9 may be performed by the processor 301 in the communication apparatus 30 shown in FIG. 3 by invoking the application program code stored in the memory 303. This is not limited in this application.

Embodiments mentioned above in this application may be combined when the solutions do not conflict. This is not limited.

The foregoing mainly describes the solutions provided in this application from the perspective of interaction between network elements. Correspondingly, this application further provides a communication apparatus. The communication apparatus may be the network node in the foregoing method embodiments, an apparatus including the network node, or a component that can be used in the network node. Alternatively, the communication apparatus may be the sensing apparatus in the foregoing method embodiments, an apparatus including the sensing apparatus, or a component that can be used in the sensing apparatus. Alternatively, the communication apparatus may be the service node in the foregoing method embodiments, an apparatus including the service node, or a component that can be used in the service node. It may be understood that, to implement the foregoing functions, the network node, the sensing apparatus, the service node, or the like includes a corresponding hardware structure and/or a corresponding software module for performing each function. A person skilled in the art should easily be aware that, in combination with units and algorithm operations of the examples described in embodiments disclosed in this specification, this application may be implemented by using hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this application, the network node, the sensing apparatus, or the service node may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. In actual implementation, there may be another division manner.

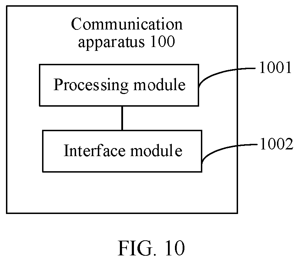

For example, when each functional module is obtained through division in an integrated manner, FIG. 10 is a diagram of a structure of a communication apparatus 100. The communication apparatus 100 includes a processing module 1001 and an interface module 1002. The processing module 1001 may also be referred to as a processing unit, is configured to perform an operation other than a sending operation and a receiving operation, and may be, for example, a processing circuit or a processor. The interface module 1002 may also be referred to as an interface unit, is configured to perform a sending operation and a receiving operation, and may be, for example, an interface circuit, a transceiver machine, a transceiver, or a communication interface.

In some embodiments, the communication apparatus 100 may further include a storage module (not shown in FIG. 10), configured to store program instructions and data.

For example, the communication apparatus 100 is configured to implement a function of a network node. The communication apparatus 100 is, for example, the network node 202 in the embodiment shown in FIG. 4 or the embodiment shown in FIG. 5.

The processing module 1001 is configured to obtain a privacy requirement of a first user. The first user is a user that requests to execute a first sensing task. For example, the processing module 1001 may be configured to perform S401.

The interface module 1002 is configured to send first information based on the privacy requirement of the first user. The first information is used to determine a first algorithm, the first algorithm is used to filter out first data corresponding to the privacy requirement of the first user from first sensing data, and the first sensing data is data obtained by executing the first sensing task. For example, the interface module 1002 may be configured to perform S402.

In a possible implementation, the first information includes privacy protection metric information of the first user, and the privacy protection metric information of the first user is determined based on the privacy requirement of the first user.

In a possible implementation, the first information includes information about the first algorithm, and the information about the first algorithm is determined based on the privacy requirement of the first user.

In a possible implementation, the first information is further used to determine at least one of the following: a parameter of the first algorithm or an apparatus for executing the first algorithm.

In a possible implementation, the processing module 1001 is specifically configured to receive a first request through the interface module 1002, where the first request is used to request to execute the first sensing task, and the first request includes information about the first sensing task and privacy requirement information of the first user; or the processing module 1001 is specifically configured to receive, through the interface module 1002, privacy requirement information of the first user from a core network element.

In a possible implementation, the interface module 1002 is further configured to receive second sensing data. The second sensing data is obtained by processing the first sensing data by using the first algorithm, and the second sensing data is used to determine a sensing result of the first sensing task.

In a possible implementation, the processing module 1001 is further configured to determine a metric of the first sensing task; and the processing module 1001 is further configured to determine a second algorithm based on the metric of the first sensing task, where the second algorithm is used to determine the sensing result based on the second sensing data.

In a possible implementation, the processing module 1001 is further configured to process the second sensing data by using the second algorithm, to obtain the sensing result.

In a possible implementation, the processing module 1001 is specifically configured to determine the second algorithm based on the metric of the first sensing task and the first algorithm.

In a possible implementation, the interface module 1002 is further configured to send the second sensing data.

When the communication apparatus 100 is configured to implement the function of the network node, for other functions that can be implemented by the communication apparatus 100, refer to related descriptions of the embodiment shown in FIG. 4 or the embodiment shown in FIG. 5. Details are not described again.

Alternatively, for example, the communication apparatus 100 is configured to implement a function of a sensing apparatus. The communication apparatus 100 is, for example, the sensing apparatus 201 in the embodiment shown in FIG. 4 or the embodiment shown in FIG. 5.

The processing module 1001 is configured to obtain a first algorithm. The first algorithm is used to filter out first data corresponding to a privacy requirement of a first user from first sensing data, and the first user is a user that requests to execute a first sensing task. For example, the processing module 1001 may be configured to perform S403.

The processing module 1001 is further configured to obtain the first sensing data. The first sensing data is data obtained by executing the first sensing task. For example, the processing module 1001 may be further configured to perform S404.

The processing module 1001 is further configured to process the first sensing data by using the first algorithm, to obtain second sensing data. For example, the processing module 1001 may be further configured to perform S405.

The interface module 1002 is configured to send the second sensing data. For example, the interface module 1002 may be configured to perform S406a or S406b.

In a possible implementation, the processing module 1001 is specifically configured to receive first information through the interface module 1002, where the first information is determined based on the privacy requirement of the first user; and the processing module 1001 is further specifically configured to determine the first algorithm based on the first information.

In a possible implementation, the first information includes privacy protection metric information of the first user; or the first information includes information about the first algorithm.

In a possible implementation, the first information is further used to determine at least one of the following: a parameter of the first algorithm or an apparatus for executing the first algorithm.

In a possible implementation, the first information includes the privacy protection metric information of a first user, and the processing module 1001 is specifically configured to negotiate the first algorithm with a first sensing apparatus based on the first information, where the first sensing apparatus is a sensing apparatus for executing the first sensing task.

In a possible implementation, the processing module 1001 is specifically configured to negotiate the first algorithm with the first sensing apparatus based on the first information and a first mapping relationship, where the first mapping relationship indicates at least one privacy protection algorithm and a privacy protection metric corresponding to each privacy protection algorithm, and the at least one privacy protection algorithm includes the first algorithm.

In a possible implementation, the processing module 1001 is specifically configured to execute the first sensing task to obtain the first sensing data.

In a possible implementation, the processing module 1001 is specifically configured to receive the first sensing data through the interface module 1002.

When the communication apparatus 100 is configured to implement the function of the sensing apparatus, for other functions that can be implemented by the communication apparatus 100, refer to related descriptions of the embodiment shown in FIG. 4 or the embodiment shown in FIG. 5. Details are not described again.

Alternatively, for example, the communication apparatus 100 is configured to implement a function of a service node. The communication apparatus 100 is, for example, the service node in the embodiment shown in FIG. 5.

The interface module 1002 is configured to send information about a first sensing task and privacy requirement information of a first user. The first user is a user that requests to execute the first sensing task.

The processing module 1001 is configured to obtain a sensing result of the first sensing task. The sensing result is obtained based on second sensing data, the second sensing data is obtained by filtering out first data corresponding to a privacy requirement of the first user from first sensing data, and the first sensing data is data obtained by executing the first sensing task. For example, the processing module 1001 may be configured to perform S408a or S408b.

In a possible implementation, the processing module 1001 is specifically configured to receive the second sensing data through the interface module 1002; and the processing module 1001 is further specifically configured to process the second sensing data by using a second algorithm, to obtain the sensing result.

In a possible implementation, the processing module 1001 is further configured to determine a metric of the first sensing task; and the processing module 1001 is further configured to determine the second algorithm based on the metric of the first sensing task.

In a possible implementation, the processing module 1001 is specifically configured to determine the second algorithm based on the metric of the first sensing task and a first algorithm, where the first algorithm is used to filter out the first data corresponding to the privacy requirement of the first user from the first sensing data.

In a possible implementation, the processing module 1001 is specifically configured to receive the sensing result through the interface module 1002.

When the communication apparatus 100 is configured to implement the function of the service node, for other functions that can be implemented by the communication apparatus 100, refer to related descriptions of the embodiment shown in FIG. 5. Details are not described again.

In a simple embodiment, a person skilled in the art may figure out that the communication apparatus 100 may be in a form shown in FIG. 3. For example, the processor 301 in FIG. 3 may invoke the computer-executable instructions stored in the memory 303, to cause the communication apparatus 100 to perform the method in the foregoing method embodiments.

For example, functions/implementation processes of the processing module 1001 and the interface module 1002 in FIG. 10 may be implemented by the processor 301 in FIG. 3 by invoking the computer-executable instructions stored in the memory 303. Alternatively, a function/an implementation process of the processing module 1001 in FIG. 10 may be implemented by the processor 301 in FIG. 3 by invoking the computer-executable instructions stored in the memory 303, and a function/an implementation process of the interface module 1002 in FIG. 10 may be implemented by the communication interface 304 in FIG. 3.

It may be understood that one or more of the foregoing modules or units may be implemented by using software, hardware, or a combination thereof. When any one of the foregoing modules or units is implemented by using software, the software exists in a form of a computer program instruction, and is stored in the memory. A processor may be configured to execute the program instruction and implement the foregoing method procedure. The processor may be built in a system-on-a-chip (System-On-a-Chip, SoC) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including: at least one processor and an interface, where the at least one processor is coupled to a memory through the interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete device. This is not specifically limited in this application.

Optionally, this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some of procedures in the foregoing method embodiments may be implemented by a computer program instructing related hardware. The program may be stored in the foregoing computer program product. When the program is executed, the procedures in the foregoing method embodiments may be performed.

Optionally, this application further provides computer instructions. All or some of the procedures in the foregoing method embodiments may be completed by the computer instructions instructing related hardware (for example, a computer, a processor, a network node, a sensing apparatus, or a service node). The program may be stored in the foregoing computer-readable storage medium or the foregoing computer program product.

Optionally, this application further provides a communication system, including the network node and the service node in the foregoing embodiments. Optionally, the communication system further includes the sensing apparatus in the foregoing embodiments.

Optionally, this application further provides a communication system, including the network node and the sensing apparatus in the foregoing embodiments.

Optionally, this application further provides a communication system, including the sensing data processing network element and the sensing service control network element in the foregoing embodiments. Optionally, the communication system further includes at least one of the following: the application function network element in the foregoing embodiments, the access and mobility management network element in the foregoing embodiments, or the sensing apparatus in the foregoing embodiments.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division. There may be another division manner during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A privacy protection method, wherein the method comprises:
obtaining a privacy requirement of a first user, wherein the first user is a user that requests to execute a first sensing task; and
sending first information based on the privacy requirement of the first user, wherein the first information is used to determine a first algorithm, the first algorithm is used to filter out first data corresponding to the privacy requirement of the first user from first sensing data, and the first sensing data is data obtained by executing the first sensing task.

2. The method according to claim 1, wherein the first information comprises privacy protection metric information of the first user, and the privacy protection metric information of the first user is determined based on the privacy requirement of the first user.

3. The method according to claim 1, wherein the first information comprises information about the first algorithm, and the information about the first algorithm is determined based on the privacy requirement of the first user.

4. The method according to any one of claims 1 to 3, wherein the first information is further used to determine at least one of the following: a parameter of the first algorithm or an apparatus for executing the first algorithm.

5. The method according to any one of claims 1 to 4, wherein the obtaining the privacy requirement of the first user comprises:
receiving a first request, wherein the first request is used to request to execute the first sensing task, and the first request comprises information about the first sensing task and privacy requirement information of the first user; or
receiving privacy requirement information of the first user from a core network element.

6. The method according to any one of claims 1 to 5, wherein the method further comprises:
receiving second sensing data, wherein the second sensing data is obtained by processing the first sensing data by using the first algorithm, and the second sensing data is used to determine a sensing result of the first sensing task.

7. The method according to claim 6, wherein the method further comprises:
determining a metric of the first sensing task; and
determining a second algorithm based on the metric of the first sensing task, wherein the second algorithm is used to determine the sensing result based on the second sensing data.

8. The method according to claim 7, wherein the method further comprises:
processing the second sensing data by using the second algorithm, to obtain the sensing result.

9. The method according to claim 7 or 8, wherein the determining the second algorithm based on the metric of the first sensing task comprises:
determining the second algorithm based on the metric of the first sensing task and the first algorithm.

10. The method according to claim 6, wherein the method further comprises:
sending the second sensing data.

11. A privacy protection method, wherein the method comprises:
obtaining a first algorithm, wherein the first algorithm is used to filter out first data corresponding to a privacy requirement of a first user from first sensing data, and the first user is a user that requests to execute a first sensing task;
obtaining the first sensing data, wherein the first sensing data is data obtained by executing the first sensing task;
processing the first sensing data by using the first algorithm, to obtain second sensing data; and
sending the second sensing data.

12. The method according to claim 11, wherein the obtaining the first algorithm comprises:
receiving first information, wherein the first information is determined based on the privacy requirement of the first user; and
determining the first algorithm based on the first information.

13. The method according to claim 12, wherein
the first information comprises privacy protection metric information of the first user; or
the first information comprises information about the first algorithm.

14. The method according to claim 12 or 13, wherein the first information is further used to determine at least one of the following: a parameter of the first algorithm or an apparatus for executing the first algorithm.

15. The method according to claim 13, wherein the first information comprises the privacy protection metric information of the first user, and the determining the first algorithm based on the first information comprises:
negotiating the first algorithm with a first sensing apparatus based on the first information, wherein the first sensing apparatus is a sensing apparatus for executing the first sensing task.

16. The method according to claim 15, wherein the negotiating the first algorithm with the first sensing apparatus based on the first information comprises:
negotiating the first algorithm with the first sensing apparatus based on the first information and a first mapping relationship, wherein the first mapping relationship indicates at least one privacy protection algorithm and a privacy protection metric corresponding to each privacy protection algorithm, and the at least one privacy protection algorithm comprises the first algorithm.

17. The method according to any one of claims 11 to 16, wherein the obtaining the first sensing data comprises:
executing the first sensing task to obtain the first sensing data.

18. The method according to any one of claims 11 to 16, wherein the obtaining the first sensing data comprises:
receiving the first sensing data.

19. A privacy protection method, wherein the method comprises:
sending privacy requirement information of a first user that corresponds to a first sensing task, wherein the first user is a user that requests to execute the first sensing task; and
obtaining a sensing result of the first sensing task, wherein the sensing result is obtained based on second sensing data, the second sensing data is obtained by filtering out first data corresponding to a privacy requirement of the first user from first sensing data, and the first sensing data is data obtained by executing the first sensing task.

20. The method according to claim 19, wherein the obtaining the sensing result of the first sensing task comprises:
receiving the second sensing data; and
processing the second sensing data by using a second algorithm, to obtain the sensing result.

21. The method according to claim 20, wherein the method further comprises:
determining a metric of the first sensing task; and
determining the second algorithm based on the metric of the first sensing task.

22. The method according to claim 21, wherein the determining the second algorithm based on the metric of the first sensing task comprises:
determining the second algorithm based on the metric of the first sensing task and a first algorithm, wherein the first algorithm is used to filter out the first data corresponding to the privacy requirement of the first user from the first sensing data.

23. The method according to claim 19, wherein the obtaining the sensing result of the first sensing task comprises:
receiving the sensing result.

24. A communication apparatus, wherein the communication apparatus comprises a processing module and an interface module, wherein
the processing module is configured to obtain a privacy requirement of a first user, wherein the first user is a user that requests to execute a first sensing task; and
the interface module is configured to send first information based on the privacy requirement of the first user, wherein the first information is used to determine a first algorithm, the first algorithm is used to filter out first data corresponding to the privacy requirement of the first user from first sensing data, and the first sensing data is data obtained by executing the first sensing task.

25. The communication apparatus according to claim 24, wherein the first information comprises privacy protection metric information of the first user, and the privacy protection metric information of the first user is determined based on the privacy requirement of the first user.

26. The communication apparatus according to claim 24, wherein the first information comprises information about the first algorithm, and the information about the first algorithm is determined based on the privacy requirement of the first user.

27. The communication apparatus according to any one of claims 24 to 26, wherein the first information is further used to determine at least one of the following: a parameter of the first algorithm or an apparatus for executing the first algorithm.

28. The communication apparatus according to any one of claims 24 to 27, wherein
the processing module is specifically configured to receive a first request through the interface module, wherein the first request is used to request to execute the first sensing task, and the first request comprises information about the first sensing task and privacy requirement information of the first user; or
the processing module is specifically configured to receive, through the interface module, privacy requirement information of the first user from a core network element.

29. The communication apparatus according to any one of claims 24 to 28, wherein
the interface module is further configured to receive second sensing data, wherein the second sensing data is obtained by processing the first sensing data by using the first algorithm, and the second sensing data is used to determine a sensing result of the first sensing task.

30. The communication apparatus according to claim 29, wherein
the processing module is further configured to determine a metric of the first sensing task; and
the processing module is further configured to determine a second algorithm based on the metric of the first sensing task, wherein the second algorithm is used to determine the sensing result based on the second sensing data.

31. The communication apparatus according to claim 30, wherein
the processing module is further configured to process the second sensing data by using the second algorithm, to obtain the sensing result.

32. The communication apparatus according to claim 30 or 31, wherein
the processing module is specifically configured to determine the second algorithm based on the metric of the first sensing task and the first algorithm.

33. The communication apparatus according to claim 29, wherein
the interface module is further configured to send the second sensing data.

34. A communication apparatus, wherein the communication apparatus comprises a processing module and an interface module, wherein
the processing module is configured to obtain a first algorithm, wherein the first algorithm is used to filter out first data corresponding to a privacy requirement of a first user from first sensing data, and the first user is a user that requests to execute a first sensing task;
the processing module is further configured to obtain the first sensing data, wherein the first sensing data is data obtained by executing the first sensing task;
the processing module is further configured to process the first sensing data by using the first algorithm, to obtain second sensing data; and
the interface module is configured to send the second sensing data.

35. The communication apparatus according to claim 34, wherein
the processing module is specifically configured to receive first information through the interface module, wherein the first information is determined based on the privacy requirement of the first user; and
the processing module is further specifically configured to determine the first algorithm based on the first information.

36. The communication apparatus according to claim 35, wherein
the first information comprises privacy protection metric information of the first user; or
the first information comprises information about the first algorithm.

37. The communication apparatus according to claim 35 or 36, wherein the first information is further used to determine at least one of the following: a parameter of the first algorithm or an apparatus for executing the first algorithm.

38. The communication apparatus according to claim 36, wherein the first information comprises the privacy protection metric information of the first user; and
the processing module is specifically configured to negotiate the first algorithm with a first sensing apparatus based on the first information, wherein the first sensing apparatus is a sensing apparatus for executing the first sensing task.

39. The communication apparatus according to claim 38, wherein
the processing module is specifically configured to negotiate the first algorithm with the first sensing apparatus based on the first information and a first mapping relationship, wherein the first mapping relationship indicates at least one privacy protection algorithm and a privacy protection metric corresponding to each privacy protection algorithm, and the at least one privacy protection algorithm comprises the first algorithm.

40. The communication apparatus according to any one of claims 34 to 39, wherein
the processing module is specifically configured to execute the first sensing task to obtain the first sensing data.

41. The communication apparatus according to any one of claims 34 to 39, wherein
the processing module is specifically configured to receive the first sensing data through the interface module.

42. A communication apparatus, wherein the communication apparatus comprises an interface module and a processing module, wherein
the interface module is configured to send privacy requirement information of a first user that corresponds to a first sensing task, wherein the first user is a user that requests to execute the first sensing task; and
the processing module is configured to obtain a sensing result of the first sensing task, wherein the sensing result is obtained based on second sensing data, the second sensing data is obtained by filtering out first data corresponding to a privacy requirement of the first user from first sensing data, and the first sensing data is data obtained by executing the first sensing task.

43. The communication apparatus according to claim 42, wherein
the processing module is specifically configured to receive the second sensing data through the interface module; and
the processing module is further specifically configured to process the second sensing data by using a second algorithm, to obtain the sensing result.

44. The communication apparatus according to claim 43, wherein
the processing module is further configured to determine a metric of the first sensing task; and
the processing module is further configured to determine the second algorithm based on the metric of the first sensing task.

45. The communication apparatus according to claim 44, wherein
the processing module is specifically configured to determine the second algorithm based on the metric of the first sensing task and a first algorithm, wherein the first algorithm is used to filter out the first data corresponding to the privacy requirement of the first user from the first sensing data.

46. The communication apparatus according to claim 42, wherein
the processing module is specifically configured to receive the sensing result through the interface module.

47. A communication apparatus, comprising a unit or a module configured to perform the method according to any one of claims 1 to 10, comprising a unit or a module configured to perform the method according to any one of claims 11 to 18, or comprising a unit or a module configured to perform the method according to any one of claims 19 to 23.

48. A communication apparatus, comprising a processor, wherein the processor is coupled to a memory, the memory is configured to store a program or instructions, and when the program or the instructions are executed by the processor, the apparatus is caused to perform the method according to any one of claims 1 to 10, the method according to any one of claims 11 to 18, or the method according to any one of claims 19 to 23.

49. A computer-readable storage medium, storing a computer program or instructions, wherein when the computer program or the instructions are executed, a computer is caused to perform the method according to any one of claims 1 to 10, the method according to any one of claims 11 to 18, or the method according to any one of claims 19 to 23.

50. A computer program product, wherein the computer program product comprises computer program code, and when the computer program code is run on a computer, the computer is caused to implement the method according to any one of claims 1 to 10, the method according to any one of claims 11 to 18, or the method according to any one of claims 19 to 23.
